# EUROPEAN PATENT APPLICATION

(11) **EP 4 502 334 A1**
(43) Date of publication of application: **05.02.2025**
(21) Application number: 23775093.0
(22) Date of filing: 24.03.2023
(51) Int. Cl.: E06B 9/24, B32B 7/027, B32B 27/00, B32B 27/18, B32B 27/30, C03C 17/32, C09J 7/38, E04B 1/76, E04C 2/54, E04D 3/06, G02B 5/00

(54) **WINDOW MATERIAL AND TRANSLUCENT ROOF MATERIAL**

(30) Priority: 24.03.2022 JP 2022048302
(71) Applicant: Nitta Corporation, Osaka-shi, Osaka 556-0022 (JP)
(72) Inventor: YAMAGUCHI, Satoshi, Yamatokoriyama-shi, Nara 639-1085 (JP); KATO, Takumi, Yamatokoriyama-shi, Nara 639-1085 (JP)
(74) Representative: Maiwald GmbH
(86) International application number: PCT/JP2023/011834
(87) International publication number: WO 2023/182500

(57) **Abstract**

Provided are: a window material and a light-transparent roof material which can autonomously change white turbidity in accordance with the temperature, and which have a simple structure and are easy to manufacture; and a vehicle, a ship, or an airplane, and a building comprising the window material and/or the light-transparent roof material.

A window material or a light-transparent roof material according to the present invention comprises at least one light-transparent base material layer and at least one pressure-sensitive adhesive layer. The pressure-sensitive adhesive layer is formed from a pressure-sensitive adhesive composition containing, with respect to 100 parts by mass of a pressure-sensitive adhesive agent, 1-20 parts by mass of a thermosensitive noncrosslinked polymer and 1-100 parts by mass of thermosensitive crosslinked fine particles. The refractive index of the thermosensitive crosslinked fine particles is reduced as the temperature increases, and the reduction rate of the refractive index is larger in the vicinity of the melting temperature of the thermosensitive crosslinked fine particles than in a temperature range other than the vicinity of the melting point. The adhesive power of the pressure-sensitive adhesive composition is reduced as the temperature increases, and the reduction rate of the adhesive power is larger in the vicinity of the melting temperature of the thermosensitive non-crosslinked polymer than in the temperature range other than the vicinity of the melting point.

## Description

### TECHNICAL FIELD

The present invention relates to a window material and a light-transparent roof material. The present invention also relates to architectures, and vehicles, ships, or aircraft including the window material and/or the light-transparent roof material.

### BACKGROUND ART

There are needs for architectures such as office buildings and arcades, and transports such as vehicles, ships, and aircraft, to reduce direct sunlight at high temperatures in summer and to let in solar radiation at low temperatures in winter. For this, a temperature-sensitive dimming liquid laminated body in which the degree of cloudiness changes autonomously in response to temperature stimulation has been proposed as a structure to be provided in a window (Patent Document 1).

### Citation List

### Patent Document

Patent Document 1: Japanese Patent No. 3337810

### DISCLOSURE OF THE INVENTION

### Problems to be Solved by the Invention

There is a problem that providing the above-mentioned laminated body requires a dedicated structure body to maintain the shape of the temperature-sensitive dimming liquid, and a window provided with the above-mentioned laminated body has a complicated structure and time and labor are required for manufacturing.

The present invention was made in view of the above problems, and has an object to provide a window material and a light-transparent roof material capable of autonomously changing the degree of cloudiness in response to temperature and being easily manufactured without having a complicated structure, and architectures, and vehicles, ships, or aircraft, including the window material and/or the light-transparent roof material.

### Means for Solving the Problems

A first aspect of the present invention is
a window material including:
at least one light-transparent base material layer and at least one adhesive layer,
the adhesive layer including an adhesive composition containing 1 to 20 parts by mass of a temperature-sensitive non-crosslinked polymer, and 1 to 100 parts by mass of temperature-sensitive crosslinked fine particles with respect to 100 parts by mass of an adhesive agent,
a refractive index of the temperature-sensitive crosslinked fine particles reducing with an increase in temperature,
a refractive index reduction proportion, as an amount of decrease in the refractive index per 1°C, of the temperature-sensitive crosslinked fine particles being larger near a melting point of the temperature-sensitive crosslinked fine particles than in a temperature range not near the melting point of the temperature-sensitive crosslinked fine particles,
an adhesive force of the adhesive composition reducing with an increase in temperature, and
the adhesive force reduction proportion, as an amount of decrease in adhesive force per 1°C, of the adhesive composition being larger near a melting point of the temperature-sensitive non-crosslinked polymer than in a temperature range not near the melting point of the temperature-sensitive non-crosslinked polymer.

A second aspect of the present invention is
a light-transparent roof material including at least one light-transparent base material layer and at least one adhesive layer,
the adhesive layer including an adhesive composition containing 1 to 20 parts by mass of a temperature-sensitive non-crosslinked polymer, and 1 to 100 parts by mass of temperature-sensitive crosslinked fine particles with respect to 100 parts by mass of an adhesive agent,
a refractive index of the temperature-sensitive crosslinked fine particles reducing with an increase in temperature, and
a refractive index reduction proportion, as an amount of decrease in the refractive index per 1°C, of the temperature-sensitive crosslinked fine particles being larger near a melting point of the temperature-sensitive crosslinked fine particles than in a temperature range not near the melting point of the temperature-sensitive crosslinked fine particles,
an adhesive force of the adhesive composition reducing with an increase in temperature, and
the adhesive force reduction proportion, as an amount of decrease in adhesive force per 1°C, of the adhesive composition being larger near a melting point of the temperature-sensitive non-crosslinked polymer than in a temperature range not near the melting point of the temperature-sensitive non-crosslinked polymer.

A third aspect of the present invention is an architecture including the window material as described in the first aspect and/or the light-transparent roof material as described in the second aspect.

A fourth aspect of the present invention is a vehicle, a ship, or an aircraft including the window material as described in the first aspect and/or the light-transparent roof material as described in the second aspect.

A fifth aspect of the present invention is
an adhesive composition including 1 to 20 parts by mass of a temperature-sensitive non-crosslinked polymer, and 1 to 100 parts by mass of temperature-sensitive crosslinked fine particles with respect to 100 parts by mass of an adhesive agent,
a refractive index of the temperature-sensitive crosslinked fine particles reducing with an increase in temperature,
a refractive index reduction proportion, as an amount of decrease in the refractive index per 1°C, of the temperature-sensitive crosslinked fine particles being larger near a melting point of the temperature-sensitive crosslinked fine particles than in a temperature range not near the melting point of the temperature-sensitive crosslinked fine particles,
an adhesive force of the adhesive composition reducing with an increase in temperature, and
the adhesive force reduction proportion, as an amount of decrease in adhesive force per 1°C, of the adhesive composition being larger near a melting point of the temperature-sensitive non-crosslinked polymer than in a temperature range not near the melting point of temperature-sensitive non-crosslinked polymer.

A sixth aspect of the present invention is
an adhesive sheet including an adhesive layer including the adhesive composition as described in the fifth aspect.

### Effects of the Invention

The present invention can provide a window material and a light-transparent roof material capable of autonomously changing the degree of cloudiness in response to temperatures and being easily manufactured without having a complicated structure, and architectures, vehicles, ships, or aircrafts including the window material and/or light-transparent roof material.

### BRIEF DESCRIPTION OF THE DRAWINGS

FIG. 1 is a sectional view showing a first window material as an example of a window material;
FIG. 2 is a sectional view showing a second window material as an example of a window material;
FIG. 3 is a sectional view showing an example of a light-transparent roof material;
FIG. 4 is a graph showing measurement results of the refractive index in temperature-sensitive crosslinked fine particles produced in Examples;
FIG. 5 is a schematic explanatory diagram showing an evaluation test method of a heat shielding property in Examples;
FIG. 6 is a photograph showing an evaluation test method of a heat shielding property in Examples; and
FIG. 7 is a photograph showing an evaluation test method of a heat shielding property in Examples.

### PREFERRED MODE FOR CARRYING OUT THE INVENTION

Hereinafter, specific embodiments of the present invention will be described in detail. However, the present invention is not limited to the following embodiments, and can be implemented with appropriate modifications added within the scope of the purpose of the present invention. Note here that each drawing shown below is a schematic view, and the size and shape of each part are appropriately exaggerated or omitted for easy understanding.

### <<Window material>>

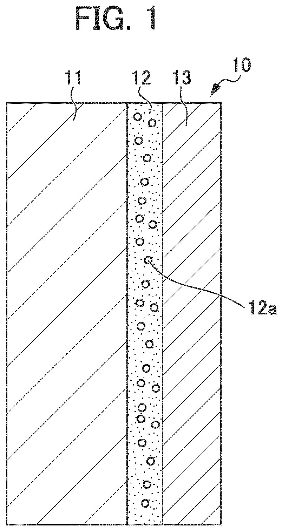

FIG. 1 shows a sectional view of a first window material 10 as an example of a window material. As shown in FIG. 1, in the first window material 10, a light-transparent base material layer 11, an adhesive layer 12, and a base material sheet 13 are laminated in this order. The adhesive layer 12 is made of an adhesive composition including an adhesive agent, a temperature-sensitive non-crosslinked polymer, and a temperature-sensitive crosslinked fine particles 12a.

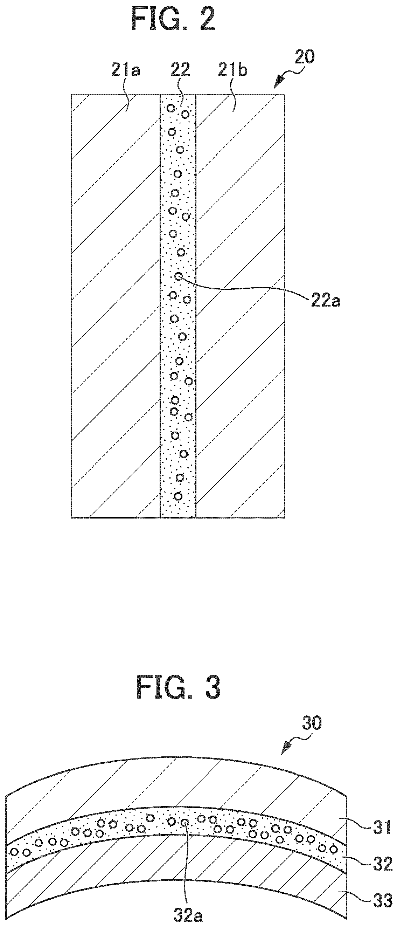

FIG. 2 shows a sectional view of a second window material 20 as another example of the window material. As shown in FIG. 2, in the second window material 20, an adhesive layer 22 is disposed between two transparent base material layers 21a and 21b. The adhesive layer 22 is made of an adhesive composition including an adhesive agent, a temperature-sensitive non-crosslinked polymer, and a temperature-sensitive crosslinked fine particles 22a.

In FIGs. 1 and 2, in the temperature-sensitive crosslinked fine particles 12a and 22a, a refractive index decreases as the temperature rises, and the refractive index reduction proportion as an amount of decrease in the refractive index per 1°C is larger near the melting point than in a temperature range not near the melting point. Therefore, when the temperature of the adhesive layers 12 and 22 rises by solar radiation or air temperature, the difference in refractive index between the temperature-sensitive crosslinked fine particles 12a and 22a and the adhesive agent increases, and the haze value increases. On the other hand, when the temperatures of the adhesive layers 12 and 22 decrease, the difference in refractive index between temperature-sensitive crosslinked fine particles 12a and 22a and the adhesive agents becomes smaller, and the haze value decreases. This allows the degree of cloudiness to change autonomously depending on temperatures, and direct sunlight can be softened at high temperatures in summer, and sunlight can be allowed to enter at low temperatures in winter.

Also, the difference in the refractive index between the temperature-sensitive crosslinked fine particles 12a and 22a and the adhesive agents can be designed to be smaller as the temperature rises.

In this case, for example, when the temperature is relatively low and the amount of sunlight is low, such as in the morning or at night, the window material functions as frost glass. Meanwhile, when the temperature rises as the amount of sunlight increases during the day time, the window material becomes transparent, so sunlight can be allowed to enter into the room.

Furthermore, when the above window material is installed in a location exposed to the outside air, the above window material become cloudy or transparent as the outside temperature rises, so it also has a function of making people living in air-conditioned rooms be visually aware of the rise in outside temperature.

Furthermore, in the adhesive composition constituting the adhesive layers 12 and 22, adhesive force decreases as a temperature rises, and the adhesive force reduction proportion as an amount of decrease in adhesive force per 1°C is larger near a melting point of a temperature-sensitive non-crosslinked polymer than in a temperature range not near the melting point. Therefore, even if air bubbles are entrained or wrinkles are formed when the adhesive layers 12 and 22 are disposed, the adhesive layers 12 and 22 can be peeled off and disposed again by increasing the temperature of the adhesive layers 12 and 22. Thereby, the window materials can be manufactured more easily.

Hereinafter, each layer constituting the first window material 10 and the second window material 20 is described.

### [Light-transparent base material layer]

A light-transparent base material constituting a light-transparent base material layer is not particularly limited as long as it is a base material that can be used as window materials for architectures, vehicles, ships, and aircraft, and, for example, a glass plate or a resin plate can be used. Examples of the material for the glass plate include soda lime glass, borosilicate glass, high silica glass, and the like. Examples of the material for the resin plate include polyalkyl methacrylates such as polymethyl methacrylate, polyalkyl acrylate, polycarbonate, polymethylstyrene, acrylonitrile-styrene copolymers, and the like.

A thickness of the light-transparent base material layer is not particularly limited, but is, for example, 0.1 mm or more, or 10 mm or less. Examples of the shape of the light-transparent base material layer include a planar shape like the first window material 10 and the second window material 20, a curved shape, and the like.

The light-transparent base material layer includes at least one layer, and may include a single layer like the first window material 10, or two or more layers like the second window material 20. When the light-transparent base material layer includes two or more layers, each layer may be made of the same type of base material, or may be made of different types of base materials. Furthermore, the layers may have the same thickness, or different thicknesses.

### [Adhesive layer]

The adhesive layer is a layer made of an adhesive composition containing 1 to 20 parts by mass of a temperature-sensitive non-crosslinked polymer and 1 to 100 parts by mass of temperature-sensitive crosslinked fine particles with respect to 100 parts by mass of the adhesive agent, and has the function of autonomously changing the degree of cloudiness and an adhesive force depending on the temperature.

A thickness of the adhesive layer is not particularly limited, but is preferably 5 µm or more and 1 mm or less, and more preferably 10 µm or more and 100 µm or less. Note here that the thicker the adhesive layer is, the more the dimming function tends to be exhibited with addition of a small amount of temperature-sensitive crosslinked fine particles. As the thickness is smaller, a large amount of the temperature-sensitive crosslinked fine particles needs to be added in order to exhibit the dimming function.

The adhesive layer includes at least one layer. The adhesive layer may include a single layer like the first window material 10 and the second window material 20, or may include two or more layers. The arrangement of the adhesive layer with respect to the light-transparent base material layer is not particularly limited. The adhesive layer may be disposed on a side of the light-transparent base material layer where sunlight enters, or may be disposed on the opposite side. When the light-transparent base material layer includes two or more layers, the adhesive layer may be disposed between the light-transparent base material layers like the second window material 20.

Note here that the adhesive layer may cover the entire surface of a surface where the adhesive layer and the light-transparent base material layer are in contact with each other, or may cover a part of the surface.

When the adhesive layer covers a part of the surface where the adhesive layer and the light-transparent base material layer are in contact with each other, a character, a symbol, a pattern, a figure, a picture, and the like, may be drawn on the light-transparent base material layer by the adhesive layer. In this case, the adhesive layer may form a character or a pattern, or a region surrounded by the adhesive layer may form a character or a pattern. Such window materials have excellent design properties when haze appears or disappears at high temperatures.

Furthermore, the adhesive layer may have a plurality of types of regions with different haze values at high temperatures or low temperatures. The haze value of the adhesive layer can be changed by changing the type of adhesive agents or temperature-sensitive crosslinked fine particles, or by changing the amount of temperature-sensitive crosslinked fine particles used.

For example, by continuously forming a plurality of adhesive layers having different haze values at high temperatures or low temperatures on a light-transparent base material in a belt-like shape, a window material excellent in design property exhibiting gradated haze at high temperatures or low temperatures can be provided.

In the adhesive layer, the difference between the haze value at 23°C and the haze value at 60°C is preferably higher by 10% or more. In particular, the haze value of the adhesive layer at 60°C is more preferably higher by 10% or more than the haze value at 23°C. This tends to make it easier to visually recognize changes in degree of cloudiness depending on temperature. Note here that in this description, the haze value of the adhesive layer is a value measured by the method described in Examples below.

The haze value of the adhesive layer at 23°C is preferably 10% or less. The lower limit of the haze value at 23°C is not particularly limited. Furthermore, the haze value of the adhesive layer at 60°C is preferably 12% or more, more preferably 20% or more, and still more preferably 30% or more. The upper limit of the haze value at 60°C is not particularly limited, but is, for example, 70% or less, or 50% or less.

In the adhesive layer, the difference between the difference between the transmittance of solar radiation at 23°C and the transmittance of solar radiation at 60°C is preferably 10% or more. The transmittance of solar radiation through the adhesive layer at 60°C is preferably lower by 10% or more than the transmittance of solar radiation at 23°C. Note here that in this description, the transmittance of solar radiation through the adhesive layer is a value measured by the method described in Examples below.

The transmittance of solar radiation through the adhesive layer at 23°C is preferably 50% or more, more preferably 70% or more, and still more preferably 80% or more. The upper limit of the transmittance of solar radiation at 23°C is not particularly limited, but is, for example, 99% or less, or 95% or less. Furthermore, the transmittance of solar radiation of the adhesive layer at 60°C is preferably 80% or less, more preferably 70% or less, and still more preferably 60% or less. The lower limit of the transmittance of solar radiation at 60°C is not particularly limited.

### (Temperature-sensitive crosslinked fine particles)

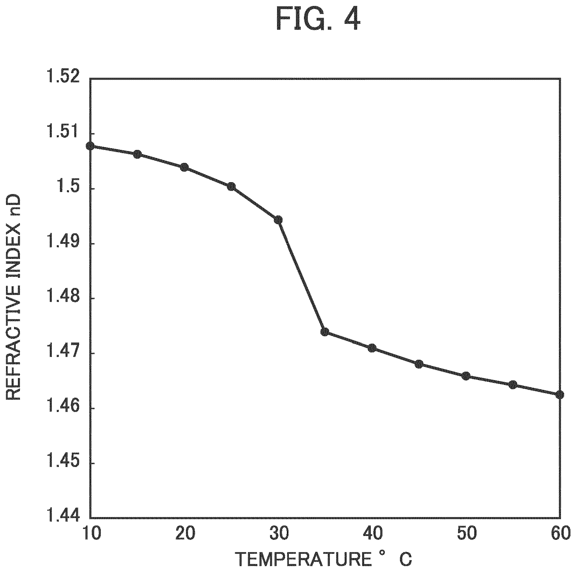

FIG. 4 is a graph showing changes in refractive index with respect to temperature changes in temperature-sensitive crosslinked fine particles (melting point: 33°C) produced in Examples described below. As shown in FIG. 4, the refractive index of the temperature-sensitive crosslinked fine particles decreases as the temperature rises, and the refractive index reduction rate, which is the amount of decrease in the refractive index per 1°C, decreases more near the melting point than in the temperature range not near the melting point.

The refractive index of the temperature-sensitive crosslinked fine particles at 60°C is preferably lower by 0.02 or more than the refractive index of the temperature-sensitive crosslinked fine particles at 23°C. This tends to make it easier to visually recognize changes in degree of cloudiness depending on temperature. Note here that in this description, the refractive index is a value measured by the method described in Examples below.

The melting point of the temperature-sensitive crosslinked fine particles is preferably 20°C or higher, and more preferably 25°C or higher. Furthermore, the melting point is preferably 100°C or lower, more preferably 60°C or lower, and still more preferably 40°C or lower. Note here that in this description, the melting point of the temperature-sensitive crosslinked fine particles is a value measured by the method described in Examples below.

The melting point of the temperature-sensitive crosslinked fine particles can be adjusted, for example, by changing the composition of the monomer components constituting the side chain crystalline polymer A included in the temperature-sensitive crosslinked fine particles. Specifically, for example, by changing the length of the side chain in a side chain crystalline polymer A, the melting point can be adjusted. When the length of the side chain is long, the temperature-sensitive crosslinked fine particles tend to have a high melting point.

The average particle diameter of the temperature-sensitive crosslinked fine particles is preferably 1 µm or more, and more preferably 3 µm or more. Furthermore, the average particle diameter is preferably 100 µm or less, and more preferably 30 µm or less. In particular, from the viewpoint of easily increasing the haze, the average particle diameter is more preferably 3 µm or more and 10 µm or less, and most preferably 3 µm or more and 6 µm or less. Transmission of solar radiation is easily suppressed. From the viewpoint of easily shielding heat, the above average particle diameter is more preferably 6 µm or more and 25 µm or less, and most preferably 10 µm or more and 25 µm or less.

Furthermore, the D90 particle diameter of the temperature-sensitive crosslinked fine particles is preferably not more than the thickness of the adhesive layer, and is, for example, 1 µm or more and 1000 µm or less, or 3 µm or more and 100 µm or less. When the D90 particle diameter is not more than the thickness of the adhesive layer, the surface of the adhesive layer becomes uniform and the adhesive force tends to be less likely to be impaired.

Note here that in this description, the average particle diameter and D90 particle diameter of the temperature-sensitive crosslinked fine particles are values measured by the method described in Examples below.

It is preferable that the temperature-sensitive crosslinked fine particles include a side chain crystalline polymer A. The side chain crystalline polymer A preferably includes a constituent unit derived from a (meth)acrylic monomer including a linear alkyl group having 14 or more carbon atoms. In the constituent unit derived from a (meth)acrylic monomer including a linear alkyl group having 14 or more carbon atoms, the linear alkyl group having 14 or more carbon atoms acts as a side chain crystalline site in the side chain crystalline polymer A. In other words, the side chain crystalline polymer A is, for example, a comb-shaped polymer including a linear alkyl group having 14 or more carbon atoms in the side chain. When the side chains are aligned in an ordered arrangement by intermolecular force or the like, the side chain crystalline polymer A is crystallized. Note that the above-mentioned (meth)acrylic monomer is an acrylic monomer or a methacrylic monomer. The upper limit of the number of carbon atoms in the linear alkyl group is preferably 50 or less, and more preferably 30 or less.

Examples of the (meth)acrylic monomer including a linear alkyl group having 14 or more carbon atoms include cetyl (meth)acrylate, stearyl (meth)acrylate, eicosyl (meth)acrylate, behenyl (meth)acrylate, and the like. These may be used alone or in combination of two or more of these.

The ratio of the mass of the constituent unit derived from the (meth)acrylic monomer including a linear alkyl group having 14 or more carbon atoms to the mass of the side chain crystalline polymer A is preferably 70% by mass or more, more preferably 80% by mass or more, and still more preferably 90% by mass or more. The above ratio may be 100% by mass, but is preferably 95% by mass or less.

The side chain crystalline polymer A may include a constituent unit derived from any other monomer copolymerizable with a (meth)acrylic monomer including a linear alkyl group having 14 or more carbon atoms. Examples of other monomers include monofunctional monomers, polyfunctional monomers, and refractive index adjusting monomers. In other words, the side chain crystalline polymer A may include a constituent unit derived from a monofunctional monomer, a polyfunctional monomer, or a refractive index adjusting monomer.

Examples of monofunctional monomers include (meth)acrylic monomers having an alkyl group having 1 to 12 carbon atoms, such as methyl (meth)acrylate, ethyl (meth)acrylate, butyl (meth)acrylate, hexyl (meth)acrylate, lauryl (meth)acrylate, and 2-ethylhexyl acrylate. These may be used alone or in combination of two or more of these. Note here that when any function is preferably added in addition to temperature sensitivity, any monomer that can be copolymerized with a (meth) acrylic monomer including a linear alkyl group having 14 or more carbon atoms and has the function can be freely copolymerized.

The ratio of the mass of the constituent unit derived from the monofunctional monomer to the mass of the side chain crystalline polymer A is preferably 0.1% by mass or more, and more preferably 1% by mass or more. Furthermore, the above ratio is preferably 20% by mass or less, and more preferably 10% by mass or less.

The polyfunctional monomer can crosslink a plurality of molecular chains included in the side chain crystalline polymer A. From the viewpoint of the dispersion state of the temperature-sensitive crosslinked fine particles during use, suppressing deformation, and maintaining repeatability of functions, the side chain crystalline polymer A preferably includes a constituent unit derived from a polyfunctional monomer. In other words, the temperature-sensitive crosslinked fine particles and the side chain crystalline polymer A are preferably crosslinked. The polyfunctional monomer has two or more, preferably 2 to 4, radically polymerizable double bonds in the molecule. Examples of the polyfunctional monomer include bifunctional (meth)acrylate, trifunctional (meth)acrylate, tetrafunctional (meth)acrylate, and the like. Specific examples include 1,6-hexanediol di(meth)acrylate, 1,9-nonanediol di(meth)acrylate, trimethylolpropane tri(meth)acrylate, pentaerythritol tetra(meth)acrylate, polyethylene glycol 200 di(meth)acrylate, ethoxylated bisphenol A di(meth)acrylate, and the like. These may be used alone or in combination of two or more of these. The polyfunctional monomer may be at least one selected from bifunctional (meth)acrylate, trifunctional (meth)acrylate, and tetrafunctional (meth)acrylate.

The ratio of the mass of the constituent unit derived from the polyfunctional monomer to the mass of the side chain crystalline polymer A is preferably 0.1% by mass or more, and more preferably 1% by mass or more. Furthermore, the above ratio is preferably 20% by mass or less, and more preferably 10% by mass or less.

The refractive index adjusting monomer may be a monomer having a refractive index of 1.300 to 1.600. Examples of the refractive index adjusting monomer include 2-(O-phenylphenoxy)ethyl acrylate (refractive index: 1.577), 2-propenoic acid (3-phenoxyphenyl)methyl ester (refractive index: 1.566), 1-naphthyl acrylate (refractive index: 1.595), acrylamide (refractive index: 1.515), hydroxyacrylamide (refractive index: 1.515), EO-modified bisphenol A diacrylate (refractive index: 1.537), acrylamide (refractive index: 1.515), 2,2,2-trifluoroethyl acrylate (refractive index: 1.348), methacryl-modified polydimethylsiloxane (refractive index: 1.408), and the like. These may be used alone or in combination of two or more of these.

The ratio of the mass of the constituent unit derived from the refractive index adjusting monomer to the mass of the side chain crystalline polymer A is preferably 0.1% by mass or more, and more preferably 1% by mass or more. Furthermore, the above ratio is preferably 30% by mass or less, more preferably 20% by mass or less, and still more preferably 10% by mass or less.

Since dispersibility in adhesive agent tends to be good, the temperature-sensitive crosslinked fine particles preferably do not include a constituent unit derived from a reactive emulsifier. A reactive emulsifier is an emulsifier having a polymerizable unsaturated bond such as a vinyl group in its molecule. A reactive emulsifier is a polymerizable monomer that has an emulsifying function and has a polymerizable group having an unsaturated bond such as a vinyl group in its molecule, and a hydrophilic group.

In the adhesive composition, the content of the temperature-sensitive crosslinked fine particles is 1 part by mass or more and 100 parts by mass or less with respect to 100 parts by mass of the adhesive agent. The content is preferably 5 parts by mass or more, and more preferably 20 parts by mass or more. Furthermore, the above content is preferably 70 parts by mass or less, and more preferably 40 parts by mass or less.

The method for producing temperature-sensitive crosslinked fine particles is not particularly limited, and conventionally known polymerization methods such as miniemulsion polymerization and suspension polymerization can be employed.

### (Temperature-sensitive non-crosslinked polymer)

Temperature-sensitive non-crosslinked polymers have a melting point. The temperature-sensitive non-crosslinked polymer crystallizes at temperatures less than the melting point, and undergoes a phase transition and exhibits fluidity at temperatures of the melting point or higher. As a result, in an adhesive composition including an adhesive agent and a temperature-sensitive non-crosslinked polymer, the adhesive force decreases as the temperature rises, and the adhesive force reduction proportion as an amount of decrease in adhesive force per 1°C is larger near the melting point of the temperature-sensitive non-crosslinked polymer in the adhesive composition than in a temperature range not near the melting point. Note here that in this description, the adhesive force of the adhesive composition means the peel strength against stainless steel (SUS), and is a value measured by the method described in the Examples below.

The peel strength against stainless steel (SUS) of the adhesive composition at 23°C is preferably 1.0 N/25 mm or more. The upper limit of the peel strength is not particularly limited.

Furthermore, peel strength against stainless steel (SUS) of the adhesive composition at 60°C is preferably 1.0 N/25 mm or less. The lower limit of the peel strength is not particularly limited.

The melting point of the temperature-sensitive non-crosslinked polymer is preferably 20°C or higher, more preferably 30°C or higher, and still more preferably 40°C or higher. Furthermore, the melting point is preferably 100°C or lower, more preferably 80°C or lower, and still more preferably 60°C or lower. In this description, the melting point of the temperature-sensitive non-crosslinked polymer is a value measured by the method described in Examples below.

The melting point of the temperature-sensitive non-crosslinked polymer is preferably higher by 5°C or more than the melting point of the temperature-sensitive crosslinked fine particles. Thus, while the degree of cloudiness is autonomously changed in response to a temperature, by increasing the temperature, the adhesive layer can be peeled and disposed again.

The melting point of the temperature-sensitive non-crosslinked polymer can be adjusted, for example, by changing the composition and the like of the monomer components constituting the side chain crystalline polymer B included in the temperature-sensitive non-crosslinked polymer. Specifically, for example, the melting point can be changed by changing the length of the side chain in the side chain crystalline polymer B. When the length of the side chain is long, the temperature-sensitive crosslinked fine particle tends to have a high melting point.

The temperature-sensitive non-crosslinked polymer preferably includes a side chain crystalline polymer B. The side chain crystalline polymer B preferably includes a constituent unit derived from a (meth)acrylic monomer including a linear alkyl group having 14 or more carbon atoms. In the constituent unit derived from a (meth)acrylic monomer including a linear alkyl group having 14 or more carbon atoms, the linear alkyl group having 14 or more carbon atoms acts as a side chain crystalline site in the side chain crystalline polymer B. In other words, the side chain crystalline polymer B is, for example, a comb-shaped polymer including a linear alkyl group having 14 or more carbon atoms in the side chain. When the side chains are aligned in an ordered arrangement by intermolecular force or the like, the side chain crystalline polymer B crystallizes. Note that the above-mentioned (meth)acrylic monomer is an acrylic monomer or a methacrylic monomer. The upper limit of the number of carbon atoms in the linear alkyl group is preferably 50 or less, and more preferably 30 or less.

Examples of the (meth)acrylic monomer including a linear alkyl group having 14 or more carbon atoms include cetyl (meth)acrylate, stearyl (meth)acrylate, eicosyl (meth)acrylate, behenyl (meth)acrylate, and the like. These may be used alone or in combination of two or more of these.

The ratio of the mass of the constituent unit derived from the (meth)acrylic monomer including a linear alkyl group having 14 or more carbon atoms to the mass of the side chain crystalline polymer B is preferably 70% by mass or more. The above ratio may be 100% by mass, but is preferably 90% by mass or less, and more preferably 80% by mass or less.

The side chain crystalline polymer B may include a constituent unit derived from any other monomer copolymerizable with a (meth)acrylic monomer including a linear alkyl group having 14 or more carbon atoms. Examples of other monomers include a compatible monomer and the like. In other words, the side chain crystalline polymer B may include a constituent unit derived from a compatible monomer.

Examples of the compatible monomer include (meth)acrylates including an alkyl group having 1 to 12 carbon atoms, such as ethylhexyl (meth)acrylate, methyl (meth)acrylate, ethyl (meth)acrylate, butyl (meth)acrylate; (meth)acrylates including an ethylene glycol group, such as 2-ethylhexyl-diglycol (meth)acrylate, methoxyethyl (meth)acrylate, methoxypolyethylene glycol mono(meth)acrylate, and ethoxy-diethylene glycol (meth)acrylate; (meth)acrylates including a hydroxyalkyl group, such as hydroxyethyl (meth)acrylate, hydroxypropyl (meth)acrylate, and hydroxyhexyl (meth)acrylate; ethylenically unsaturated monomers including a carboxyl group, such as acrylic acid, methacrylic acid, crotonic acid, itaconic acid, maleic acid, and fumaric acid; styrene, vinyl acetate, and the like. These may be used alone or in combination of two or more of these. Among these, (meth)acrylates including an alkyl group having 1 to 12 carbon atoms and ethylenically unsaturated monomers including a carboxyl group are preferable.

The ratio of the mass of the constituent unit derived from the compatible monomer to the mass of the side chain crystalline polymer B is preferably 0.1% by mass or more, and more preferably 1% by mass or more. The above ratio is preferably 90% by mass or less, and more preferably 80% by mass or less.

The side chain crystalline polymer B may include the same constituent unit as the constituent unit included in the polymer constituting the adhesive agent. Thus, dispersibility of the non-crosslinked polymer in the adhesive agent tends to be good, and the adhesive force tends to be lowered during warming.

The weight average molecular weight of the temperature-sensitive non-crosslinked polymer is preferably 1000 or more, and more preferably 5000 or more. The above weight average molecular weight is preferably 100000 or less, and more preferably 10000 or less. When the weight average molecular weight is 100000 or less, an influence on the haze value when adding the temperature-sensitive non-crosslinked polymer tends to be suppressed. When the weight average molecular weight is 10000 or less, the adhesive force tends to be reduced during at the time of warming. Note here that in this description, the weight average molecular weight of the temperature-sensitive non-crosslinked polymer is a value measured by the method described in Examples below.

The weight average molecular weight of the temperature-sensitive non-crosslinked polymer can be adjusted, for example, by using a chain transfer agent during polymerization. Examples of the chain transfer agent include thiol compounds such as dodecylmercaptan, mercaptopropionic acid, mercaptosuccinic acid, ethylhexylmercaptoacetate, mercaptoethanol, and cyclohexanethiol. These may be used alone or in combination of two or more of these.

In the adhesive composition, the content of the temperature-sensitive non-crosslinked polymer is 1 part by mass or more and 20 parts by mass or less with respect to 100 parts by mass of the adhesive agent. The above content is preferably 3 parts by mass or more. The above content is preferably 10 parts by mass or less.

The method for producing the temperature-sensitive non-crosslinked polymer is not particularly limited, and conventionally known polymerization methods such as solution polymerization and UV polymerization can be used.

### (Adhesive agent)

The adhesive agent is not particularly limited, and conventionally known adhesive agents such as acrylic adhesive agents, natural rubber adhesive agents, synthetic rubber adhesive agents, silicone adhesive agents, and urethane adhesive agents can be used. Among them, acrylic adhesive agent is preferable.

The polymer constituting the adhesive agent preferably includes a constituent unit derived from an adhesive monomer that contributes to adhesiveness and a constituent unit derived from a functional group monomer for crosslinking. The polymer constituting the adhesive agent may include constituent units derived from other monomers copolymerizable with these monomers. Examples of other monomers include refractive index adjusting monomers. In other words, the polymer constituting the adhesive agent may include a constituent unit derived from a refractive index adjusting monomer.

Examples of adhesive monomers include (meth)acrylates having an alkyl group having 1 to 12 carbon atoms, such as ethylhexyl (meth)acrylate, methyl (meth)acrylate, ethyl (meth)acrylate, and butyl (meth)acrylate; (meth)acrylates with ethylene glycol groups such as 2-ethylhexyl-diglycol (meth)acrylate, methoxyethyl (meth)acrylate, methoxypolyethylene glycol mono(meth)acrylate, ethoxy-diethylene glycol (meth)acrylate; ethylenically unsaturated monomers such as styrene and vinyl acetate; and the like. These may be used alone or in combination of two or more of these. Among these, (meth)acrylates having an alkyl group having 1 to 12 carbon atoms are preferred.

The ratio of the mass of the constituent unit derived from the adhesive monomer to the mass of the polymer constituting the adhesive agent is preferably 50% by mass or more, and more preferably 70% by mass or more. Furthermore, the above ratio is preferably 99.9% by mass or less, and more preferably 95% by mass or less.

Examples of functional group monomers include (meth)acrylates having a hydroxyalkyl group such as hydroxyethyl (meth)acrylate, hydroxypropyl (meth)acrylate, and hydroxyhexyl (meth)acrylate; ethylenically unsaturated monomers having a carboxyl group such as acrylic acid, methacrylic acid, crotonic acid, itaconic acid, maleic acid, and fumaric acid; and the like. These may be used alone or in combination of two or more of these.

The ratio of the mass of the constituent unit derived from the functional group monomer to the mass of the polymer constituting the adhesive agent is preferably 0.1% by mass or more, and more preferably 1% by mass or more. Furthermore, the above ratio is preferably 30% by mass or less, more preferably 20% by mass or less, and still more preferably 10% by mass or less. When the ratio is 0.1% by mass or more, shape retention property tends to be good. When the ratio is 30% by mass or less, the viscosity is not excessively high and coating property tends to be good.

The refractive index adjusting monomer may be a monomer having a refractive index of 1.300 to 1.600. Examples of the refractive index adjusting monomer include 2-(O-phenylphenoxy)ethyl acrylate (refractive index: 1.577), 2-propenoic acid (3-phenoxyphenyl) methyl ester (refractive index: 1.566), 1-naphthyl acrylate (refractive index: 1.595), acrylamide (refractive index: 1.515), hydroxyacrylamide (refractive index: 1.515), EO-modified bisphenol A diacrylate (refractive index: 1.537), acrylamide (refractive index: 1.515), 2,2,2-trifluoroethyl acrylate (refractive index: 1.348), methacryl-modified polydimethylsiloxane (refractive index: 1.408), and the like. These may be used alone or in combination of two or more of these.

The ratio of the mass of the constituent unit derived from the refractive index adjusting monomer to the mass of the polymer constituting the adhesive agent is preferably 0.1% by mass or more, more preferably 1% by mass or more, and still more preferably 10% by mass or more. Furthermore, the above ratio is preferably 30% by mass or less.

The weight average molecular weight of the adhesive agent is preferably 200,000 or more, and more preferably 300,000 or more. The above weight average molecular weight is preferably 2,000,000 or less, more preferably 1,000,000 or less, and still more preferably 600,000 or less. When the weight average molecular weight is 200,000 or more, the shape retention property tends to be good. When the weight average molecular weight is 2,000,000 or less, the viscosity is not excessively high and coating property tends to be good. Note here that in this description, the weight average molecular weight of an adhesive agent is a value measured by the method described in Examples below.

The glass transition temperature (Tg) of the adhesive agent is preferably 25°C or lower from the viewpoint that high adhesive force is exhibited. In this description, the glass transition temperature is a value measured by the method described in Examples below.

The difference in refractive index at 23°C between the adhesive agent and the temperature-sensitive crosslinked fine particles is preferably less than 0.015, and more preferably less than 0.010. Furthermore, the refractive index difference at 60°C is preferably 0.015 or more. The upper limit of the refractive index difference at 60°C is not particularly limited, but is, for example, 0.1.

Thus, in general, the adhesive layer exhibits high light-transparency in a warm atmosphere where humans and pets can live comfortably, and in high-temperature atmospheres such as summer, the adhesive layer exhibits haze and light-transparency decreases.

Furthermore, by adjusting the refractive indices of the adhesive agent and the temperature-sensitive crosslinked fine particles, the refractive index difference between the adhesive agent and the temperature-sensitive crosslinked fine particles at 23°C can be designed to be 0.015 or more, and the refractive index difference at 60°C be less than 0.015.

In this case, for example, when an adhesive agent is applied to a window glass, the window glass functions as frost glass under the condition that the temperature is relatively low and the amount of sunlight is small, such as in the morning and at night, and on the other hand, when the temperature rises with the increase of the amount of sunlight in the daytime, the window glass becomes transparent and the room can be efficiently lightened. Thus, lightening to a room only in the daytime can be easily carried out without opening and closing a curtain.

The ratio of the mass of the adhesive agent to the mass of the solid content of the adhesive composition is not particularly limited, but is, for example, 50% by mass or more and 95% by mass or less. Note here that in this description, the solid content of the adhesive composition means all the components except a solvent such as an aqueous solvent and an organic solvent from the adhesive composition.

The method for producing the adhesive agent is not particularly limited, and the adhesive agent can be obtained by conventionally known polymerization methods such as solution polymerization and UV polymerization.

The adhesive composition may contain a crosslinking agent for crosslinking the adhesive agent. In other words, the adhesive agent may be crosslinked. Examples of the crosslinking agents used include aziridine crosslinking agents, metal chelate crosslinking agents, epoxy crosslinking agents, and isocyanate crosslinking agents.

In the adhesive composition, the content of the crosslinking agent is not particularly limited, but is, for example, 0.1 parts by mass or more and 10 parts by mass or less with respect to 100 parts by mass of the adhesive agent. When the content is 0.1 parts by mass or more, the shape retention property tends to be less likely to decrease. Furthermore, when the content is 10 parts by mass or less, high adhesive force tends to be easily exhibited.

The adhesive composition may include other additives such as a solvent such as an organic solvent, an inhibitor that suppresses the progress of crosslinking, an adhesion giving resin (tackifier), an ultraviolet (UV) absorber, a light stabilizer (HALS), an antioxidant, an infrared absorber, dyes and pigments.

### [Application]

The mode of use of the above-mentioned adhesive composition is not limited. The mode of use of the above-mentioned adhesive composition can be appropriately selected depending on the purpose.

The above adhesive composition can autonomously change degree of cloudiness in response to a temperature.

When the adhesive composition is designed to produce haze at high temperatures, the adhesive composition can be used suitably, for example, for window materials, light-transparent roof material, and the like, because direct sunlight can be softened during high temperatures in summer and sunlight can be allowed to enter during low temperatures in winter.

On the other hand, when the adhesive composition is designed to produce haze at low temperatures, for example, when the adhesive composition is applied to window glass, the window glass functions as frost glass in a condition in which the temperature is relatively low and the amount of sunlight is low, such as in the morning or at night, while the window glass becomes transparent and sunlight can be allowed to enter the room efficiently when the temperature rises with increase in the amount of sunlight during daytime.

Furthermore, the above adhesive composition can allow designs such as a character, a symbol, a pattern, a figure, and a picture to appear or disappear when haze appears or disappears at high temperatures due to heat sources such as lighting, solar radiation, or air temperatures, and can give excellent display properties (designs such as a character and a symbol) and decorative properties (designs such as a pattern, a figure, and a picture) to an object including an adhesive layer. Therefore, the adhesive composition can be suitably used, for example, for decoration of light covers, for decoration of light-transparent base materials of window materials and light-transparent roof materials, and for display of light-transparent base materials such as window materials and light-transparent roof materials.

### [Base material sheet]

The above window material may or may not include a base material sheet. The base material sheet has a function as a support when laminating the adhesive layer on the light-transparent base material layer, and a function as a protective layer for the adhesive layer.

The base material constituting the base material sheet is not particularly limited as long as it is a light-transparent base material. Examples of the base material include PET such as corona treated PET, untreated PET, highly transparent PET, annealed PET, UV cut PET, heat shielding PET, anti-fog PET, hard coat PET, blasted PET; transparent PI, and the like.

### [Method for producing window material]

The method for producing the above window material is not particularly limited, and examples thereof include a method of coating a base material sheet with an adhesive composition to produce an adhesive sheet, and then pasting the adhesive sheet on a light-transparent base material, and the like. The adhesive layer may be formed by directly coating the light-transparent base material with the adhesive composition. In this case, it is preferable to cover the exposed surface of the adhesive layer formed on the light-transparent base material with a base material sheet so that a tacky surface of the adhesive layer is not exposed indoors or outdoors. Furthermore, when the light-transmitting base material layer includes two or more light-transparent base material layers like the second window material 20, the method also includes a method of arranging an adhesive layer between the light-transmitting base material layers, and the like. In this case, after applying an adhesive composition on one base material layer to form an adhesive layer, another base material layer may be pasted onto the exposed surface of the adhesive layer.

Furthermore, the second window material 20 including an adhesive layer between light-transparent base materials can be produced by preparing two laminated bodies in which one light-transparent base material layer and one adhesive layer are laminated so that they are in contact with each other, and pasting the two laminated bodies together on the exposed surface of the adhesive layer.

### [Application]

The mode of use of the window material described above is not particularly limited. The mode of use of the window material described above can be appropriately selected depending on the purposes. The window material described above can be suitably used, for example, in architectures such as houses, buildings, warehouses, and arcades, as well as in vehicles, ships, and aircraft.

### <<Light-transparent roof material>>

FIG. 3 is a sectional view showing an example of a light-transparent roof material. As shown in FIG. 3, in the light-transparent roof material 30, a light-transparent base material layer 31, an adhesive layer 32, and a base material sheet 33 are laminated in this order. The adhesive layer 32 is made of an adhesive composition including an adhesive agent, a temperature-sensitive non-crosslinked polymer, and a temperature-sensitive crosslinked fine particles 32a.

In FIG. 3, in the temperature-sensitive crosslinked fine particles 32a, a refractive index decreases as the temperature rises, and the refractive index reduction proportion as an amount of decrease in the refractive index per 1°C is larger near the melting point than in a temperature range not near the melting point. Therefore, when the temperature of the adhesive layer 32 rises by solar radiation or air temperature, the difference in refractive index between the temperature-sensitive crosslinked fine particles 32a and the adhesive agents increases, and the haze value increases. On the other hand, when the temperature of the adhesive layer 32 decreases, the haze value decreases due to the decrease in the refractive index difference between the temperature-sensitive crosslinked fine particles 32a and the adhesive agent. This can allow the degree of cloudiness to change autonomously depending on the temperature, soften direct sunlight during high temperatures in summer, and allow sunlight to enter during low temperatures in the winter.

Note here that it can also be designed so that the difference in the refractive index between the temperature-sensitive crosslinked fine particle 32a and the adhesive agent becomes smaller as the temperature rises.

Furthermore, in the adhesive composition constituting the adhesive layer 32, adhesive force decreases as a temperature rises, and the adhesive force reduction proportion as an amount of decrease in adhesive force per 1°C is larger near a melting point of a temperature-sensitive non-crosslinked polymer than in a temperature range not near the melting point. Therefore, even if air bubbles are entrained or wrinkles are formed when the adhesive layer 32 is disposed, the adhesive layer 32 can be peeled off and disposed again by increasing the temperature of the adhesive layer 32 and disposed again. Thereby, the window materials can be manufactured more easily.

For the light-transparent roof material, each layer of the light-transparent base material layer, the adhesive layer, the base material sheet, the production method, and application of use are the same as each layer, production method, and application of use of the window material.

### <<Adhesive composition>>

The adhesive composition contains 1 to 20 parts by mass of temperature-sensitive non-crosslinked polymer, and 1 to 100 parts by mass of temperature-sensitive crosslinked fine particles with respect to 100 parts by mass of the adhesive agent.

The refractive index of temperature-sensitive crosslinked fine particles decreases as the temperature rises, and the refractive index reduction rate, which is an amount of decrease in the refractive index per 1°C, is larger near the melting point than in the temperature range not near the melting point.

When each refractive index is adjusted so that the difference in refractive index between the temperature-sensitive crosslinked fine particles and the adhesive agent, when the temperature of the adhesive layer formed from the adhesive composition rises due to solar radiation or air temperature, the difference in refractive index between the temperature-sensitive crosslinked fine particles and the adhesive agent increases, and the haze value increases. On the other hand, when the temperature of the adhesive layer decreases, the difference in refractive index between the temperature-sensitive crosslinked fine particles and the adhesive agent becomes smaller, and the haze value decreases. On the contrary, if each refractive index is adjusted so that the difference in refractive index between the temperature-sensitive crosslinked fine particles and the adhesive agent becomes small at high temperatures, the haze value decreases as the temperature of the adhesive layer rises, and the haze value increases as the temperature of the adhesive layer decreases.

As a result, in the former case, when the adhesive layer is disposed on the window material, a light-transparent roof material, and the like, the degree of cloudiness can be autonomously changed depending on temperatures, and direct sunlight can be softened during high temperatures in summer, and sunlight can be allowed to enter during low temperatures in winter.

Furthermore, when an adhesive layer is formed using an adhesive composition so that designs such as a character, a symbol, a pattern, a figure, a picture, and the like, are drawn, when haze appears or disappears due to high temperatures by heat sources such as lighting, sunlight, and air temperature, the design can be allowed to appear or disappear. This makes it possible to impart excellent display properties (designs such as a character and a symbol) and decorative properties (designs such as a pattern, a figure, and a picture) to the object provided with the adhesive layer.

Furthermore, in any cases, when adhesive sheet including the adhesive layer is used, a haze value of the adhesive layer become lower or higher, so that even in a case where contact surface thermometer is not provided, change of the adhesive force can be visually recognized.

In the adhesive composition, the adhesive force decreases as a temperature rises, and the adhesive force reduction proportion as an amount of decrease in adhesive force per 1°C is larger near a melting point of a temperature-sensitive non-crosslinked polymer in the adhesive composition than in a temperature range not near the melting point.

Therefore, even if air bubbles are entrained or wrinkles are formed when the adhesive layer is disposed, the adhesive layer can be peeled off and disposed again by increasing the temperature of the adhesive layer. Furthermore, it is possible to firmly temporarily fix and peel off workpieces and the like in the manufacturing process without destroying the workpieces.

### (Temperature-sensitive crosslinked fine particles)

The refractive index of the temperature-sensitive crosslinked fine particles decreases as the temperature rises, and the refractive index reduction rate, which is the amount of decrease in the refractive index per 1°C, decreases more near the melting point than in the temperature range not near the melting point.

The refractive index of the temperature-sensitive crosslinked fine particles at 60°C is preferably lower by 0.02 or more than the refractive index of the temperature-sensitive crosslinked fine particles at 23°C. This tends to make it easier to visually recognize changes in degree of cloudiness depending on temperature.

The melting point of the temperature-sensitive crosslinked fine particles is preferably 20°C or higher, and more preferably 25°C or higher. Furthermore, the melting point is preferably 100°C or lower, more preferably 60°C or lower, and still more preferably 40°C or lower.

The melting point of the temperature-sensitive crosslinked fine particles can be adjusted, for example, by changing the composition of the monomer components constituting the side chain crystalline polymer A included in the temperature-sensitive crosslinked fine particles. Specifically, for example, by changing the length of the side chain in a side chain crystalline polymer A, the melting point can be adjusted. When the length of the side chain is long, the temperature-sensitive crosslinked fine particles tend to have a high melting point.

The average particle diameter of the temperature-sensitive crosslinked fine particles is preferably 1 µm or more, and more preferably 3 µm or more. Furthermore, the average particle diameter is preferably 100 µm or less, and more preferably 30 µm or less. In particular, from the viewpoint of easily increasing the haze, the average particle diameter is more preferably 3 µm or more and 10 µm or less, and most preferably 3 µm or more and 6 µm or less. Transmission of solar radiation is easily suppressed. From the viewpoint of easily shielding heat, the above average particle diameter is more preferably 6 µm or more and 25 µm or less, and most preferably 10 µm or more and 25 µm or less.

Furthermore, the D90 particle diameter of the temperature-sensitive crosslinked fine particles is preferably not more than the thickness of the adhesive layer, and is, for example, 1 µm or more and 1000 µm or less, or 3 µm or more and 100 µm or less. When the D90 particle diameter is not more than the thickness of the adhesive layer, the surface of the adhesive layer becomes uniform and the adhesive force tends to be less likely to be impaired.

It is preferable that the temperature-sensitive crosslinked fine particles include a side chain crystalline polymer A. The side chain crystalline polymer A preferably includes a constituent unit derived from a (meth)acrylic monomer including a linear alkyl group having 14 or more carbon atoms. In the constituent unit derived from a (meth)acrylic monomer including a linear alkyl group having 14 or more carbon atoms, the linear alkyl group having 14 or more carbon atoms acts as a side chain crystalline site in the side chain crystalline polymer A. In other words, the side chain crystalline polymer A is, for example, a comb-shaped polymer including a linear alkyl group having 14 or more carbon atoms in the side chain. When the side chains are aligned in an ordered arrangement by intermolecular force or the like, the side chain crystalline polymer A is crystallized. Note that the above-mentioned (meth)acrylic monomer is an acrylic monomer or a methacrylic monomer. The upper limit of the number of carbon atoms in the linear alkyl group is preferably 50 or less, and more preferably 30 or less.

Examples of the (meth)acrylic monomer including a linear alkyl group having 14 or more carbon atoms include cetyl (meth)acrylate, stearyl (meth)acrylate, eicosyl (meth)acrylate, behenyl (meth)acrylate, and the like. These may be used alone or in combination of two or more of these.

The ratio of the mass of the constituent unit derived from the (meth)acrylic monomer including a linear alkyl group having 14 or more carbon atoms to the mass of the side chain crystalline polymer A is preferably 70% by mass or more, more preferably 80% by mass or more, and still more preferably 90% by mass or more. The above ratio may be 100% by mass, but is preferably 95% by mass or less.

The side chain crystalline polymer A may include a constituent unit derived from any other monomer copolymerizable with a (meth)acrylic monomer including a linear alkyl group having 14 or more carbon atoms. Examples of other monomers include monofunctional monomers, polyfunctional monomers, and refractive index adjusting monomers. In other words, the side chain crystalline polymer A may include a constituent unit derived from a monofunctional monomer, a polyfunctional monomer, or a refractive index adjusting monomer.

Examples of monofunctional monomers include (meth)acrylic monomers having an alkyl group having 1 to 12 carbon atoms, such as methyl (meth)acrylate, ethyl (meth)acrylate, butyl (meth)acrylate, hexyl (meth)acrylate, lauryl (meth)acrylate, and 2-ethylhexyl acrylate. These may be used alone or in combination of two or more of these. Note here that when any function is preferably added in addition to temperature sensitivity, any monomer that can be copolymerized with a (meth) acrylic monomer including a linear alkyl group having 14 or more carbon atoms and has the function can be freely copolymerized.

The ratio of the mass of the constituent unit derived from the monofunctional monomer to the mass of the side chain crystalline polymer A is preferably 0.1% by mass or more, and more preferably 1% by mass or more. Furthermore, the above ratio is preferably 20% by mass or less, and more preferably 10% by mass or less.

The polyfunctional monomer can crosslink a plurality of molecular chains included in the side chain crystalline polymer A. From the viewpoint of the dispersion state of the temperature-sensitive crosslinked fine particles during use, suppressing deformation, and maintaining repeatability of functions, the side chain crystalline polymer A preferably includes a constituent unit derived from a polyfunctional monomer. In other words, the temperature-sensitive crosslinked fine particles and the side chain crystalline polymer A are preferably crosslinked. The polyfunctional monomer has two or more, preferably 2 to 4, radically polymerizable double bonds in the molecule. Examples of the polyfunctional monomer include bifunctional (meth)acrylate, trifunctional (meth)acrylate, tetrafunctional (meth)acrylate, and the like. Specific examples include 1,6-hexanediol di(meth)acrylate, 1,9-nonanediol di(meth)acrylate, trimethylolpropane tri(meth)acrylate, pentaerythritol tetra(meth)acrylate, polyethylene glycol 200 di(meth)acrylate, ethoxylated bisphenol A di(meth)acrylate, and the like. These may be used alone or in combination of two or more of these. The polyfunctional monomer may be at least one selected from bifunctional (meth)acrylate, trifunctional (meth)acrylate, and tetrafunctional (meth)acrylate.

The ratio of the mass of the constituent unit derived from the polyfunctional monomer to the mass of the side chain crystalline polymer A is preferably 0.1% by mass or more, and more preferably 1% by mass or more. Furthermore, the above ratio is preferably 20% by mass or less, and more preferably 10% by mass or less.

The refractive index adjusting monomer may be a monomer having a refractive index of 1.300 to 1.600. Examples of the refractive index adjusting monomer include 2-(O-phenylphenoxy)ethyl acrylate (refractive index: 1.577), 2-propenoic acid (3-phenoxyphenyl)methyl ester (refractive index: 1.566), 1-naphthyl acrylate (refractive index: 1.595), acrylamide (refractive index: 1.515), hydroxyacrylamide (refractive index: 1.515), EO-modified bisphenol A diacrylate (refractive index: 1.537), acrylamide (refractive index: 1.515), 2,2,2-trifluoroethyl acrylate (refractive index: 1.348), methacryl-modified polydimethylsiloxane (refractive index: 1.408), and the like. These may be used alone or in combination of two or more of these.

The ratio of the mass of the constituent unit derived from the refractive index adjusting monomer to the mass of the side chain crystalline polymer A is preferably 0.1% by mass or more, and more preferably 1% by mass or more. Furthermore, the above ratio is preferably 30% by mass or less, more preferably 20% by mass or less, and still more preferably 10% by mass or less.

Since dispersibility in adhesive agent tends to be good, the temperature-sensitive crosslinked fine particles preferably do not include a constituent unit derived from a reactive emulsifier. A reactive emulsifier is an emulsifier having a polymerizable unsaturated bond such as a vinyl group in its molecule. A reactive emulsifier is a polymerizable monomer that has an emulsifying function and has a polymerizable group having an unsaturated bond such as a vinyl group in its molecule, and a hydrophilic group.

In the adhesive composition, the content of the temperature-sensitive crosslinked fine particles is 1 part by mass or more and 100 parts by mass or less with respect to 100 parts by mass of the adhesive agent. The content is preferably 5 parts by mass or more, and more preferably 20 parts by mass or more. Furthermore, the above content is preferably 70 parts by mass or less, and more preferably 40 parts by mass or less.

The method for producing temperature-sensitive crosslinked fine particles is not particularly limited, and conventionally known polymerization methods such as miniemulsion polymerization and suspension polymerization can be employed.

### (Temperature-sensitive non-crosslinked polymer)

Temperature-sensitive non-crosslinked polymers have a melting point. The temperature-sensitive non-crosslinked polymer crystallizes at temperatures less than the melting point, and undergoes a phase transition and exhibits fluidity at temperatures of the melting point or higher. As a result, in an adhesive composition including an adhesive agent and a temperature-sensitive non-crosslinked polymer, the adhesive force decreases as the temperature rises, and the adhesive force reduction proportion as an amount of decrease in adhesive force per 1°C is larger near the melting point of the temperature-sensitive non-crosslinked polymer in the adhesive composition than in a temperature range not near the melting point.

The peel strength against stainless steel (SUS) of the adhesive composition at 23°C is preferably 1.0 N/25 mm or more. The upper limit of the peel strength is not particularly limited.

Furthermore, peel strength against stainless steel (SUS) of the adhesive composition at 60°C is preferably 1.0 N/25 mm or less. The lower limit of the peel strength is not particularly limited.

The melting point of the temperature-sensitive non-crosslinked polymer is preferably 20°C or higher, more preferably 30°C or higher, and still more preferably 40°C or higher. Furthermore, the melting point is preferably 100°C or lower, more preferably 80°C or lower, and still more preferably 60°C or lower.

The melting point of the temperature-sensitive non-crosslinked polymer is preferably higher by 5°C or more than the melting point of the temperature-sensitive crosslinked fine particle. Thus, while the degree of cloudiness is autonomously changed in response to a temperature, even if air bubbles are entrained or wrinkles are formed when the adhesive layer is disposed, the adhesive layer can be peeled off and disposed again by increasing the temperature of the adhesive layer.

In another aspect, the melting point of the temperature-sensitive non-crosslinked polymer is preferably within a range of less than 5°C from the melting point of the temperature-sensitive crosslinked fine particles. Thus, degree of cloudiness is autonomously changed in response to a temperature, even in a case where contact surface thermometer is not provided, change of the adhesive force can be visually recognized.

The melting point of the temperature-sensitive non-crosslinked polymer can be adjusted, for example, by changing the composition and the like of the monomer components constituting the side chain crystalline polymer B included in the temperature-sensitive non-crosslinked polymer. Specifically, for example, the melting point can be changed by changing the length of the side chain in the side chain crystalline polymer B. When the length of the side chain is long, the temperature-sensitive crosslinked fine particle tends to have a high melting point.

The temperature-sensitive non-crosslinked polymer preferably includes a side chain crystalline polymer B. The side chain crystalline polymer B preferably includes a constituent unit derived from a (meth)acrylic monomer including a linear alkyl group having 14 or more carbon atoms. In the constituent unit derived from a (meth)acrylic monomer including a linear alkyl group having 14 or more carbon atoms, the linear alkyl group having 14 or more carbon atoms acts as a side chain crystalline site in the side chain crystalline polymer B. In other words, the side chain crystalline polymer B is, for example, a comb-shaped polymer including a linear alkyl group having 14 or more carbon atoms in the side chain. When the side chains are aligned in an ordered arrangement by intermolecular force or the like, the side chain crystalline polymer B crystallizes. Note that the above-mentioned (meth)acrylic monomer is an acrylic monomer or a methacrylic monomer. The upper limit of the number of carbon atoms in the linear alkyl group is preferably 50 or less, and more preferably 30 or less.

Examples of the (meth)acrylic monomer including a linear alkyl group having 14 or more carbon atoms include cetyl (meth)acrylate, stearyl (meth)acrylate, eicosyl (meth)acrylate, behenyl (meth)acrylate, and the like. These may be used alone or in combination of two or more of these.

The ratio of the mass of the constituent unit derived from the (meth)acrylic monomer including a linear alkyl group having 14 or more carbon atoms to the mass of the side chain crystalline polymer B is preferably 70% by mass or more. The above ratio may be 100% by mass, but is preferably 90% by mass or less, and more preferably 80% by mass or less.

The side chain crystalline polymer B may include a constituent unit derived from any other monomer copolymerizable with a (meth)acrylic monomer including a linear alkyl group having 14 or more carbon atoms. Examples of other monomers include a compatible monomer and the like. In other words, the side chain crystalline polymer B may include a constituent unit derived from a compatible monomer.

Examples of the compatible monomer include (meth)acrylates including an alkyl group having 1 to 12 carbon atoms, such as ethylhexyl (meth)acrylate, methyl (meth)acrylate, ethyl (meth)acrylate, butyl (meth)acrylate; (meth)acrylates including an ethylene glycol group, such as 2-ethylhexyl-diglycol (meth)acrylate, methoxyethyl (meth)acrylate, methoxypolyethylene glycol mono(meth)acrylate, and ethoxy-diethylene glycol (meth)acrylate; (meth)acrylates including a hydroxyalkyl group, such as hydroxyethyl (meth)acrylate, hydroxypropyl (meth)acrylate, and hydroxyhexyl (meth)acrylate; ethylenically unsaturated monomers including a carboxyl group, such as acrylic acid, methacrylic acid, crotonic acid, itaconic acid, maleic acid, and fumaric acid; styrene, vinyl acetate, and the like. These may be used alone or in combination of two or more of these. Among these, (meth)acrylates including an alkyl group having 1 to 12 carbon atoms and ethylenically unsaturated monomers including a carboxyl group are preferable.

The ratio of the mass of the constituent unit derived from the compatible monomer to the mass of the side chain crystalline polymer B is preferably 0.1% by mass or more, and more preferably 1% by mass or more. The above ratio is preferably 90% by mass or less, and more preferably 80% by mass or less.

The side chain crystalline polymer B may include the same constituent unit as the constituent unit included in the polymer constituting the adhesive agent. Thus, dispersibility of the non-crosslinked polymer in the adhesive agent tends to be good, and the adhesive force tends to be lowered during warming.

The weight average molecular weight of the temperature-sensitive non-crosslinked polymer is preferably 1000 or more, and more preferably 5000 or more. The above weight average molecular weight is preferably 100000 or less, and more preferably 10000 or less. When the weight average molecular weight is 100000 or less, an influence on the haze value when adding the temperature-sensitive non-crosslinked polymer tends to be suppressed. When the weight average molecular weight is 10000 or less, the adhesive force tends to be reduced during at the time of warming.

The weight average molecular weight of the temperature-sensitive non-crosslinked polymer can be adjusted, for example, by using a chain transfer agent during polymerization. Examples of the chain transfer agent include thiol compounds such as dodecylmercaptan, mercaptopropionic acid, mercaptosuccinic acid, ethylhexylmercaptoacetate, mercaptoethanol, and cyclohexanethiol. These may be used alone or in combination of two or more of these.

In the adhesive composition, the content of the temperature-sensitive non-crosslinked polymer is 1 part by mass or more and 20 parts by mass or less with respect to 100 parts by mass of the adhesive agent. The above content is preferably 3 parts by mass or more. The above content is preferably 10 parts by mass or less.

The method for producing the temperature-sensitive non-crosslinked polymer is not particularly limited, and conventionally known polymerization methods such as solution polymerization and UV polymerization can be used.

### (Adhesive agent)

The adhesive agent is not particularly limited, and conventionally known adhesive agents such as acrylic adhesive agents, natural rubber adhesive agents, synthetic rubber adhesive agents, silicone adhesive agents, and urethane adhesive agents can be used. Among them, acrylic adhesive agent is preferable.

The polymer constituting the adhesive agent preferably includes a constituent unit derived from an adhesive monomer that contributes to adhesiveness and a constituent unit derived from a functional group monomer for crosslinking. The polymer constituting the adhesive agent may include constituent units derived from other monomers copolymerizable with these monomers. Examples of other monomers include refractive index adjusting monomers. In other words, the polymer constituting the adhesive agent may include a constituent unit derived from a refractive index adjusting monomer.

Examples of adhesive monomers include (meth)acrylates having an alkyl group having 1 to 12 carbon atoms, such as ethylhexyl (meth)acrylate, methyl (meth)acrylate, ethyl (meth)acrylate, and butyl (meth)acrylate; (meth)acrylates with ethylene glycol groups such as 2-ethylhexyl-diglycol (meth)acrylate, methoxyethyl (meth)acrylate, methoxypolyethylene glycol mono(meth)acrylate, ethoxy-diethylene glycol (meth)acrylate; ethylenically unsaturated monomers such as styrene and vinyl acetate; and the like. These may be used alone or in combination of two or more of these. Among these, (meth)acrylates having an alkyl group having 1 to 12 carbon atoms are preferred.

The ratio of the mass of the constituent unit derived from the adhesive monomer to the mass of the polymer constituting the adhesive agent is preferably 50% by mass or more, and more preferably 70% by mass or more. Furthermore, the above ratio is preferably 99.9% by mass or less, and more preferably 90% by mass or less.

Examples of functional group monomers include (meth)acrylates having a hydroxyalkyl group such as hydroxyethyl (meth)acrylate, hydroxypropyl (meth)acrylate, and hydroxyhexyl (meth)acrylate; ethylenically unsaturated monomers having a carboxyl group such as acrylic acid, methacrylic acid, crotonic acid, itaconic acid, maleic acid, and fumaric acid; and the like. These may be used alone or in combination of two or more of these.

The ratio of the mass of the constituent unit derived from the functional group monomer to the mass of the polymer constituting the adhesive agent is preferably 0.1% by mass or more, and more preferably 1% by mass or more. Furthermore, the above ratio is preferably 30% by mass or less, more preferably 20% by mass or less, and still more preferably 10% by mass or less. When the ratio is 0.1% by mass or more, shape retention property tends to be good. When the ratio is 30% by mass or less, the viscosity is not excessively high and coating property tends to be good.

The refractive index adjusting monomer may be a monomer having a refractive index of 1.300 to 1.600. Examples of the refractive index adjusting monomer include 2-(O-phenylphenoxy)ethyl acrylate (refractive index: 1.577), 2-propenoic acid (3-phenoxyphenyl) methyl ester (refractive index: 1.566), 1-naphthyl acrylate (refractive index: 1.595), acrylamide (refractive index: 1.515), hydroxyacrylamide (refractive index: 1.515), EO-modified bisphenol A diacrylate (refractive index: 1.537), acrylamide (refractive index: 1.515), 2,2,2-trifluoroethyl acrylate (refractive index: 1.348), methacryl-modified polydimethylsiloxane (refractive index: 1.408), and the like. These may be used alone or in combination of two or more of these.

The ratio of the mass of the constituent unit derived from the refractive index adjusting monomer to the mass of the polymer constituting the adhesive agent is preferably 0.1% by mass or more, more preferably 1% by mass or more, and still more preferably 10% by mass or more. Furthermore, the above ratio is preferably 30% by mass or less.

The weight average molecular weight of the adhesive agent is preferably 200,000 or more, and more preferably 300,000 or more. The above weight average molecular weight is preferably 2,000,000 or less, more preferably 1,000,000 or less, and still more preferably 600,000 or less. When the weight average molecular weight is 200,000 or more, the shape retention property tends to be good. When the weight average molecular weight is 2,000,000 or less, the viscosity is not excessively high and coating property tends to be good.

The glass transition temperature (Tg) of the adhesive agent is preferably 25°C or lower from the viewpoint that high adhesive force is exhibited.

The difference in refractive index at 23°C between the adhesive agent and the temperature-sensitive crosslinked fine particles is preferably less than 0.015, and more preferably less than 0.010. Furthermore, the refractive index difference at 60°C is preferably 0.015 or more. The upper limit of the refractive index difference at 60°C is not particularly limited, but is, for example, 0.1.

The ratio of the mass of the adhesive agent to the mass of the solid content of the adhesive composition is not particularly limited, but is, for example, 50% by mass or more and 95% by mass or less. Note here that in this description, the solid content of the adhesive composition means all the components except a solvent such as an aqueous solvent and an organic solvent from the adhesive composition.

The method for producing the adhesive agent is not particularly limited, and the adhesive agent can be obtained by conventionally known polymerization methods such as solution polymerization and UV polymerization.

The adhesive composition may contain a crosslinking agent for crosslinking the adhesive agent. In other words, the adhesive agent may be crosslinked. Examples of the crosslinking agents used include aziridine crosslinking agents, metal chelate crosslinking agents, epoxy crosslinking agents, and isocyanate crosslinking agents.

In the adhesive composition, the content of the crosslinking agent is not particularly limited, but is, for example, 0.1 parts by mass or more and 10 parts by mass or less with respect to 100 parts by mass of the adhesive agent. When the content is 0.1 parts by mass or more, the shape retention property tends to be less likely to decrease. Furthermore, when the content is 10 parts by mass or less, high adhesive force tends to be easily exhibited.

The adhesive composition may include other additives such as a solvent such as an organic solvent, an inhibitor that suppresses the progress of crosslinking, an adhesion giving resin (tackifier), an ultraviolet (UV) absorber, a light stabilizer (HALS), an antioxidant, an infrared absorber, dyes and pigments.

### <<Adhesive sheet>>

The adhesive sheet includes an adhesive layer made of an adhesive composition.

As described above, the temperature-sensitive dimming liquid laminated body of Patent Document 1 requires a dedicated structure body for maintaining the shape of the temperature-sensitive dimming liquid. Therefore, when installing it later on existing windows or roofs, large-scale construction work such as replacing the entire window is required, which makes it difficult to be introduced.

In contrast, it is advantageous that adhesive sheets do not require a dedicated structure body to maintain their shape, and can be easily installed by simply pasting them onto existing windows or roofs, and can autonomously change their degree of cloudiness depending on temperatures.

A thickness of the adhesive layer is not particularly limited, but is preferably 5 µm or more and 1 mm or less, and more preferably 10 µm or more and 100 µm or less. Note here that the thicker the adhesive layer is, the more the dimming function tends to be exhibited with addition of a small amount of temperature-sensitive crosslinked fine particles. The thinner the thickness is, the more temperature-sensitive crosslinked fine particles tend to need to be added in order to exhibit the light dimming function.

In the adhesive layer, the difference between the haze value at 23°C and the haze value at 60°C is preferably 10% or more. In particular, the haze value of the adhesive layer at 60°C is preferably higher by 10% or more than the haze value at 23°C. This tends to make it easier to visually recognize changes in degree of cloudiness depending on temperature.

The haze value of the adhesive layer at 23°C is preferably 10% or less. The lower limit of the haze value at 23°C is not particularly limited. Furthermore, the haze value of the adhesive layer at 60°C is preferably 12% or more, more preferably 20% or more, and still more preferably 30% or more. The upper limit of the haze value at 60°C is not particularly limited, but is, for example, 70% or less, or 50% or less.

In the adhesive layer, the difference between the transmittance of solar radiation at 23°C and the transmittance of solar radiation at 60°C is preferably 10% or more. The transmittance of solar radiation through the adhesive layer at 60°C is preferably lower by 10% or more than the transmittance of solar radiation at 23°C.

The transmittance of solar radiation through the adhesive layer at 23°C is preferably 50% or more, more preferably 70% or more, and still more preferably 80% or more. The upper limit of the transmittance of solar radiation at 23°C is not particularly limited, but is, for example, 99% or less, or 95% or less. Furthermore, the transmittance of solar radiation of the adhesive layer at 60°C is preferably 80% or less, more preferably 70% or less, and still more preferably 60% or less. The lower limit of the transmittance of solar radiation at 60°C is not particularly limited.

The adhesive sheet may include a base material sheet. The base material constituting the base material sheet is not particularly limited as long as it is a light-transparent base material. Examples of the base material include PET such as corona treated PET, untreated PET, highly transparent PET, annealed PET, UV cut PET, heat shielding PET, anti-fog PET, hard coat PET, blasted PET; transparent PI, and the like.

The adhesive layer may be formed only on one surface of the base material sheet, or may be formed on both surfaces. Alternatively, an adhesive layer may be formed on one surface of the base material sheet, and an adhesive layer other than the adhesive layer described above may be formed on the other surface.

A release sheet may be laminated on the surface of the adhesive layer in the same manner as the base material sheet.

The adhesive sheet can be produced by a usual method using the adhesive composition described above. For example, a method may be used in which a coating solution prepared by adding a solvent and a crosslinking agent to an adhesive composition as necessary is applied to a base material sheet using a coater or the like, and then dried by heating or the like to form an adhesive layer.

Examples of the coater include a knife coater, roll coater, calendar coater, comma coater, and the like. Furthermore, depending on the coating thickness and the viscosity of the coating liquid, gravure coater, rod coater, and the like may also be used.

### EXAMPLES

Hereinafter, the present invention will be explained in more detail with reference to Examples, but the scope of the present invention is not limited to these Examples.

Hereinafter, various chemicals used in Examples will be collectively described.
SA: Blemmer SA (stearyl acrylate) manufactured by NOF Corporation
CA: Blemmer CA (cetyl acrylate) manufactured by NOF Corporation
VA: Blemmer VA (behenyl acrylate) manufactured by NOF Corporation
A-HD-N: A-HD-N (1,6-hexanediol diacrylate) manufactured by Shin-Nakamura Chemical Co., Ltd.
EHA: 2-ethylhexyl acrylate manufactured by Toagosei Co., Ltd.
C1A: Methyl acrylate manufactured by Nippon Shokubai Co., Ltd.
AA: acrylic acid manufactured by Nippon Shokubai Co., Ltd.
A-LEN-10: A-LEN-10 (2-(O-phenylphenoxy)ethyl acrylate) manufactured by Shin-Nakamura Chemical Co., Ltd.
HEA: 2-hydroxyethyl acrylate manufactured by Nippon Shokubai Co., Ltd.
NF-13: Hitenol NF-13 manufactured by DKS Co., Ltd.
Peroyl L: Peroyl L (dilauroyl peroxide) manufactured by NOF Corporation
Perbutyl ND: Perbutyl ND (t-butyl peroxyneodecanoate) manufactured by NOF Corporation
Perhexyl PV: Perhexyl PV (t-hexyl peroxypivalate) manufactured by NOF Corporation
L45: Coronate L-45 (isocyanate crosslinking agent) manufactured by Tosoh Corporation.

### [Production of temperature-sensitive crosslinked fine particles]

A side chain crystalline monomer, a polyfunctional monomer, and an initiator were added to the reaction vessel in the proportions shown in Table 1. The mixture in the reaction vessel was stirred with a spatula to uniformly mix. Next, an aqueous medium and an emulsifier in the proportions shown in Table 1 were added to the reaction vessel to obtain a mixed solution. Water was used as the aqueous medium. The aqueous medium was added so that the ratio of the mass of the side chain crystalline monomer to the total mass of the side chain crystalline monomer and the mass of the aqueous medium in the mixed solution was 40% by mass. Furthermore, the mixed solution was stirred for 5 minutes at 7500 rpm using a homogenizer manufactured by IKA (main body: T 25 digital ULTRA-TURRAX, shaft generator: S25N-25F) to form monomer components into particles. Finally, nitrogen was introduced into the mixed solution, bubbled, and air (oxygen) in the mixed solution was removed, and then heated and stirred at 67°C for 2 hours and at 80°C for 2 hours to polymerize the monomer components. Then, the aqueous medium was removed from the generated fine particles by suction filtration and vacuum drying to obtain temperature-sensitive crosslinked fine particles 1.

Temperature-sensitive crosslinked fine particles 2 were obtained in the same manner as in the method for producing the temperature-sensitive crosslinked fine particles 1, except that the mixed solution was stirred for 5 minutes at 14000 rpm using a homogenizer.

Temperature-sensitive crosslinked fine particles 3 were obtained in the same manner as in the method for producing the temperature-sensitive crosslinked fine particles 1, except that the mixed solution was stirred for 3 minutes at 5600 rpm using a homogenizer.

Temperature-sensitive crosslinked fine particles 4 were obtained in the same manner as in the method for producing the temperature-sensitive crosslinked fine particles 1, except that the mixed solution was stirred for 5 minutes at 4200 rpm using a homogenizer.

### (Average particle diameter and D90 particle diameter of temperature-sensitive crosslinked fine particles)

The particle size distribution of the temperature-sensitive crosslinked fine particles was measured using a laser diffraction particle size distribution meter "Mastersizer 3000" manufactured by Malvern. In the particle size distribution, the particle diameter corresponding to a cumulative volume frequency of 50% calculated from the smaller particle diameter of the temperature-sensitive crosslinked fine particles is defined as the "average particle diameter", and the particle diameter corresponding to a cumulative volume frequency of 90% is defined as the "D90 particle size." The results are shown in Table 1.

### (Melting point of temperature-sensitive crosslinked fine particles)

Using a DSC (differential scanning calorimeter) manufactured by Seiko Instruments Inc., the melting point of the temperature-sensitive crosslinked fine particles was measured from the temperature at the top of the endothermic peak measured in the range of -30°C to 100°C at a sweep rate of 10°C/min. The results are shown in Table 1.

**[Table 1]**

| | | | Temperature-sensitive crosslinked fine particle | | | |
|---|---|---|---|---|---|---|
| | | | 1 | 2 | 3 | 4 |
| Added amount (part by mass) | Side chain crystalline monomer | SA | 25 | 25 | 25 | 25 |
| | | CA | 75 | 75 | 75 | 75 |
| | Polyfunctional monomer | A-HD-N | 10 | 10 | 10 | 10 |
| | Initiator | Peroyl L | 0.5 | 0.5 | 0.5 | 0.5 |
| | Emulsifier | NF-13 | 0.6 (Solid content) | 0.6 (Solid content) | 0.6 (Solid content) | 0.6 (Solid content) |
| Average particle diameter | | | 8µm | 4µm | 13µm | 18µm |
| D90 particle diameter | | | 20µm | 7µm | 21µm | 29µm |
| Melting point | | | 33°C | 33°C | 33°C | 33°C |

### [Production of adhesive agent]

### (BR1)

Monomers were charged into the reaction vessel in the proportions shown in Table 2. A solvent (ethyl acetate/toluene = 70/30 (mass ratio)) was added to the reaction vessel to dilute the monomer so that the monomer concentration was 33% by mass. Next, the diluted monomer solution was stirred and heated while nitrogen was introduced into the diluted monomer solution and bubbled. When the liquid temperature reached 55°C, an initiator was added to the diluted monomer solution in the proportions shown in Table 2. Furthermore, after heating and stirring the liquid in the reaction vessel at 55°C for 4 hours, the temperature of the oil bath was raised to 80°C. When the liquid temperature exceeded 70°C, a promoter was added to the reaction solution in the proportions shown in Table 2. Finally, heating and stirring were carried out at 80°C for 2 hours to obtain an adhesive agent (BR1).

### (BR2)

Adhesive agent (BR2) was obtained in the same manner as in adhesive agent (BR1) except that monomers were charged into the reaction vessel in the proportions shown in Table 2, and a solvent (ethyl acetate/methyl ethyl ketone = 90/10 (mass ratio)) was added to the reaction vessel to dilute the monomer so that the monomer concentration was 38% by mass.

### (Weight average molecular weight of adhesive agent)

Measurement was carried out by gel permeation chromatography (GPC), and the obtained measured value was converted into polystyrene. The results are shown in Table 2.

### (Glass transition temperature of adhesive agent)

Using a dynamic viscoelasticity measuring device "HAAKE MARS III" manufactured by Thermo Scientific, tan δ (loss tangent) was measured at 20 Hz, 5°C /min, and in a temperature increasing process from -100°C to 100°C. The glass transition temperature (Tg) was obtained from the peak temperature of tan δ obtained. The results are shown in Table 2.

**[Table 2]**

| | | | BR1 | BR2 |
|---|---|---|---|---|
| Added amount (part by mass) | Monomer | EHA | 52 | 72 |
| | | C1A | 40 | - |
| | | A-LEN10 | - | 20 |
| | | HEA | 8 | 8 |
| | Initiator | Perbutyl ND | 0.3 | 0.3 |
| | Promoter | Perhexyl PV | 0.3 | 0.3 |
| Weight average molecular weight | | | 400,000 | 400,000 |
| Glass transition temperature | | | -25°C | -30°C |

### [Production of temperature-sensitive non-crosslinked polymer]

Monomers and chain transfer agents were charged into a reaction vessel in the proportions shown in Table 3. A solvent (toluene) was added to the reaction vessel to dilute the monomer so that the monomer concentration was 50% by mass. Next, the diluted monomer solution was stirred and heated while nitrogen was introduced and bubbled into the diluted monomer solution. When the liquid temperature reached 80°C, an initiator was added to the diluted monomer solution in the proportions shown in Table 3. Further, heating and stirring were carried out at 80°C for 3 hours to obtain a temperature-sensitive non-crosslinked polymer.

### (Weight average molecular weight of temperature-sensitive non-crosslinked polymer)

Measurement was carried out by the same method as for the weight average molecular weight of the adhesive agent. The results are shown in Table 3.

### (Melting point of temperature-sensitive non-crosslinked polymer)

Measurement was carried out by the same method as for the melting point of the temperature-sensitive crosslinked fine particles. The results are shown in Table 3.

**[Table 3]**

| | | | |
|---|---|---|---|
| Added amount (part by mass) | Monomer | VA | 40 |
| | | SA | 35 |
| | | C1A | 20 |
| | | AA | 5 |
| | Chain transfer agent | Dodecylmercaptan | 8 |
| | Initiator | Perhexyl PV | 0.3 |
| Weight average molecular weight | | | 8,000 |
| Melting point | | | 49°C |

### [Production of adhesive sheet]

Temperature-sensitive crosslinked fine particles were added to the resulting adhesive agent in the proportions shown in Tables 4 to 6. A solvent (ethyl acetate) was added to the mixture of the adhesive agent and the temperature-sensitive crosslinked fine particles to adjust the solid content concentration of the mixture to 30% by mass. A temperature-sensitive non-crosslinked polymer was added to the adjusted mixture in the proportions shown in Tables 4 to 6 to obtain an adhesive composition. A crosslinking agent was added to this adhesive composition in the proportions shown in Tables 4 to 6. The adhesive composition was applied to the corona-treated surface of a PET film (thickness: 100 µm) using a bar coater. Thereafter, the PET film was dried by heating at 110°C for 3 minutes in a hot air circulating oven to obtain adhesive sheets (Examples 1 to 8) having an adhesive layer (thickness: 40 µm) made of a crosslinked adhesive composition.

### (Refractive indices of temperature-sensitive crosslinked fine particles and adhesive agent)

The refractive indices at 23°C and 60°C of the obtained temperature-sensitive crosslinked fine particles and adhesive agent were measured using an automatic refractometer "Abbemat 350" manufactured by Anton Paar. The results are shown in Tables 4 to 6.

### (Haze value of adhesive layer)

The haze value of the adhesive layer of the obtained adhesive sheet at 23°C, 40°C, and 60°C was measured in accordance with ASTM D1003 using a spectrophotometer "CM3600" (C light source) manufactured by Konica Minolta, Inc. With ITO glass as a reference, measurement was carried out by pasting an adhesive sheet on the ITO glass surface. The results are shown in Tables 4 to 6.

### (Peel strength)

The 180° peel strength of the obtained adhesive sheets against stainless steel (SUS) at 23°C and 60°C was measured in accordance with JIS Z0237. Specifically, the adhesive sheet was pasted to SUS, left to stand for 20 minutes, and then peeled off by 180° using a load cell at a speed of 300 mm/min. As the SUS, plate-shaped SUS304 was used. The adhesive sheet was attached to SUS by moving a 2 kg roller back and forth 5 times on the adhesive sheet. The results are shown in Tables 4 to 6.

Note here that the peel strength of the adhesive sheets was also measured at temperatures between 23°C and 60°C, and changes in the proportion of decrease in adhesive force, which is an amount of decrease in adhesive force per 1°C of the adhesive sheets, were determined. As a result, it was confirmed that the proportion of decrease in adhesive force near 49°C as the melting point of the temperature-sensitive non-crosslinked polymer was greater than in the temperature range not near the melting point of the temperature-sensitive non-crosslinked polymer.

### (Transmittance of solar radiation)

For the obtained adhesive sheets, transmittance of solar radiation at 23°C, 40°C, and 60°C were measured using a spectrophotometer "V770DS" manufactured by JASCO Corporation in accordance with JIS A5759:2016 6.5. Since the measurement was carried out after warming to 40°C and 60°C, ITO glass (GMT-100-12, manufactured by Geomatec) having a thickness of 1.1 mm was used as the object to which the adhesive sheet was attached. Specifically, a test piece was prepared by attaching an adhesive sheet on one surface of the ITO glass. At 23°C, 40°C, and 60°C (the surface temperatures of the ITO glass, measured by a contact surface thermometer), the spectral transmittance of each wavelength from 300 to 2500 nm was measured using a spectrophotometer with the glass surface of the test piece facing the light source. The transmittance of solar radiation was calculated based on the relative spectral distribution of solar radiation as specified in JIS A5759:2016. The results are shown in Tables 5 and 6.

### (Heat shielding property)

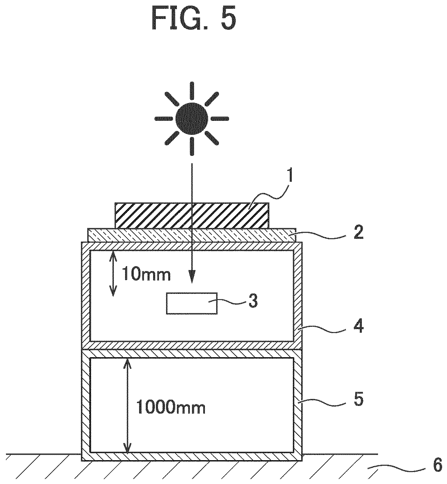

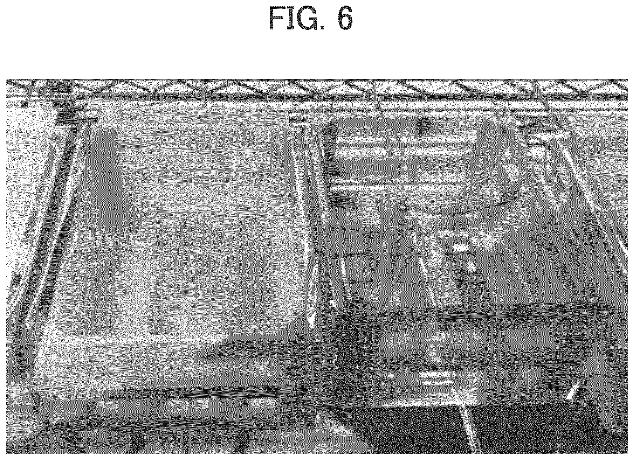

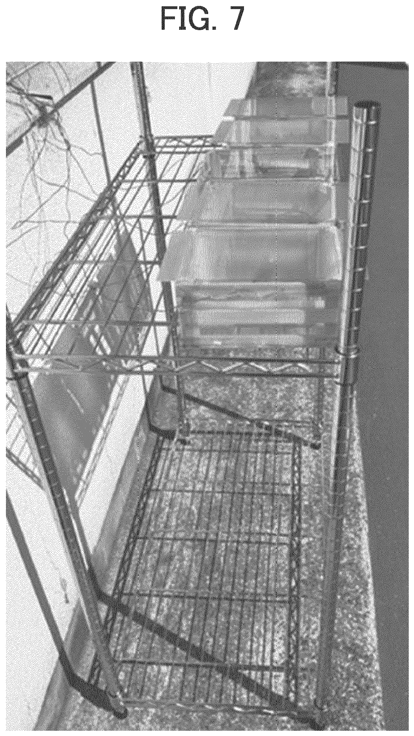

The heat shielding properties of the obtained adhesive sheets were evaluated as shown in FIGS. 5 to 7. Specifically, a test piece was prepared by attaching an adhesive sheet 1 on a glass plate 2. The test piece was placed as a top surface on a wooden frame 4 measuring 120 mm in width × 200 mm in depth × 100 mm in height so that the adhesive sheet surface facing upward. A thermometer (thermocouple) 3 was disposed at a position 10 mm below the glass surface. The side surfaces and bottom surface of the wooden frame 4 were covered with polyethylene sheets as a windbreak. The wooden frame 4 on which the test piece was placed was disposed on a metal rack 5 so that the height from the ground 6 was 1000 mm. The temperature rise value of the thermocouple 3 was recorded during solar radiation (solar radiation time: about 360 minutes, average temperature: 32°C). A glass plate to which no adhesive sheet was attached was used as a blank test piece, and the temperature rise value was recorded in the same manner. The difference from the temperature rise value of the blank was calculated. The results are shown in Tables 5 to 6.

**[Table 4]**

| | | | Example 1 | Example 2 |
|---|---|---|---|---|
| Added amount (part by mass) | Adhesive agent | | BR1 100 (Solid content) | BR2 100 (Solid content) |
| | Temperature-sensitive crosslinked fine particle | | Fine particle 1 30 | Fine particle 1 30 |
| | Temperature-sensitive non-crosslinked polymer | | 5 | 5 |
| | Crosslinking agent | L45 | 0.5 | 0.5 |
| Refractive index of temperature-sensitive crosslinked fine particle | | 23°C | 1.502 | 1.502 |
| | | 60°C | 1.471 | 1.471 |
| Refractive index of adhesive agent | | 23°C | 1.476 | 1.496 |
| | | 60°C | 1.462 | 1.489 |
| Haze of adhesive layer (%) | | 23°C | 26.0 | 6.8 |
| | | 60°C | 2.1 | 38.8 |
| Peel strength against SUS (N/25mm) | | 23°C | 2.8 | 1.4 |
| | | 60°C | 0.03 | 0.08 |

As is apparent from Table 4, according to Examples 1 and 2, it is shown that the adhesive layers of Examples 1 and 2 having the above-mentioned predetermined configuration can autonomously change the degree of cloudiness depending on the temperature. It is also shown that when the temperature is increased, the adhesive force is reduced. Therefore, from Examples 1 and 2, it is shown that window materials and light-transparent roof materials including the above-mentioned adhesive layer can autonomously change the degree of cloudiness depending on temperatures, and that since the adhesive layer can be peeled off and disposed again, production is easy.

**[Table 5]**

| | | | Example 3 | Example 1 | Example 4 | Example 5 |
|---|---|---|---|---|---|---|
| Added amount (part by mass) | Adhesive agent | | BR1 100 (Solid content) | BR1 100 (Solid content) | BR1 100 (Solid content) | BR1 100 (Solid content) |
| | Temperature-sensitive crosslinked fine particle | | Fine particle 2 30 | Fine particle 1 30 | Fine particle 3 30 | Fine particle 5 30 |
| | Temperature-sensitive non-crosslinked polymer | | 5 | 5 | 5 | 5 |
| | Crosslinking agent | L45 | 0.5 | 0.5 | 0.5 | 0.5 |
| Refractive index of temperature-sensitive crosslinked fine particle | | 23°C | 1.502 | 1.502 | 1.502 | 1.502 |
| | | 60°C | 1.471 | 1.471 | 1.471 | 1.471 |
| Refractive index of adhesive agent | | 23°C | 1.476 | 1.476 | 1.476 | 1.476 |
| | | 60°C | 1.462 | 1.462 | 1.462 | 1.462 |
| Haze of adhesive layer (%) | | 23°C | 32.4 | 26.0 | 20.9 | 18.8 |
| | | 40°C | 11 | 10.3 | 9.7 | 8.3 |
| | | 60°C | 2.7 | 2.1 | 1.8 | 1.5 |
| Transmittance of solar radiation (%) | | 23°C | 47.7 | 46.1 | 49.3 | 54.7 |
| | | 40°C | 94.6 | 93.0 | 92.0 | 94.1 |
| | | 60°C | 96.4 | 95.8 | 95.9 | 96.0 |
| Heat shielding property | | | 1.1 | 2.5 | 3.5 | 4.0 |
| Peel strength against SUS (N/25mm) | | 23°C | 2.1 | 2.8 | 3.1 | 3.5 |
| | | 60°C | 0.03 | 0.03 | 0.05 | 0.05 |

**[Table 6]**

| | | | Example 6 | Example 2 | Example 7 | Example 8 |
|---|---|---|---|---|---|---|
| Added amount (part by mass) | Adhesive agent | | BR2 100 (Solid content) | BR2 100 (Solid content) | BR2 100 (Solid content) | BR2 100 (Solid content) |
| | Temperature-sensitive crosslinked fine particle | | Fine particle 2 30 | Fine particle 1 30 | Fine particle 3 30 | Fine particle 4 30 |
| | Temperature-sensitive non-crosslinked polymer | | 5 | 5 | 5 | 5 |
| | Crosslinking agent | L45 | 0.5 | 0.5 | 0.5 | 0.5 |
| Refractive index of temperature-sensitive crosslinked fine particle | | 23°C | 1.502 | 1.502 | 1.502 | 1.502 |
| | | 60°C | 1.471 | 1.471 | 1.471 | 1.471 |
| Refractive index of adhesive agent | | 23°C | 1.496 | 1.496 | 1.496 | 1.496 |
| | | 60°C | 1.489 | 1.489 | 1.489 | 1.489 |
| Haze of adhesive layer (%) | | 23°C | 9.2 | 6.8 | 4.9 | 4.4 |
| | | 40°C | 49.0 | 37.8 | 29.8 | 24.9 |
| | | 60°C | 50.3 | 38.8 | 31.6 | 24.9 |
| Transmittance of solar radiation (%) | | 23°C | 90.5 | 93.4 | 94.8 | 94.5 |
| | | 40°C | 43.0 | 44.4 | 48.6 | 53.9 |
| | | 60°C | 43.4 | 45.2 | 49.7 | 55.2 |
| Heat shielding property | | | 0.5 | 2.9 | 3.0 | 3.0 |
| Peel strength against SUS (N/25mm) | | 23°C | 1.1 | 1.4 | 1.7 | 1.8 |
| | | 60°C | 0.06 | 0.08 | 0.08 | 0.06 |

### EXPLANATION OF REFERENCE NUMERALS

10 First window material
11 Light-transparent base material layer
12 Adhesive layer
12a Temperature-sensitive crosslinked fine particle
13 Base material sheet
20 Second window material
21a, 21b Light-transparent base material layer
22 Adhesive layer
22a Temperature-sensitive crosslinked fine particle
30 Light-transparent roof material
31 Light-transparent base material layer
32 Adhesive layer
32a Temperature-sensitive crosslinked fine particle
33 Base material sheet

## Claims

1. A window material comprising:
at least one layer of a light-transparent base material layer and at least one layer of an adhesive layer,
the adhesive layer comprising an adhesive composition comprising 1 to 20 parts by mass of temperature-sensitive non-crosslinked polymer, and 1 to 100 parts by mass of temperature-sensitive crosslinked fine particles with respect to 100 parts by mass of an adhesive agent,
a refractive index of the temperature-sensitive crosslinked fine particles reducing with an increase in temperature,
a refractive index reduction proportion, as an amount of decrease in the refractive index per 1°C, of the temperature-sensitive crosslinked fine particles being larger near a melting point of the temperature-sensitive crosslinked fine particles than in a temperature range not near the melting point of the temperature-sensitive crosslinked fine particles,
an adhesive force of the adhesive composition reducing with an increase in temperature, and
an adhesive force reduction proportion, as an amount of decrease in adhesive force per 1°C, of the adhesive composition being larger near a melting point of the temperature-sensitive non-crosslinked polymer than in a temperature range not near the melting point of the temperature-sensitive non-crosslinked polymer.

2. The window material according to claim 1, wherein a difference between a haze value at 23°C and a haze value at 60°C is 10% or more, and
an adhesive force of the adhesive composition is 1 N/25 mm or more at 23°C and 0.1 N/25 mm or less at 60°C.

3. The window material according to claim 1 or claim 2, wherein a melting point of the temperature-sensitive non-crosslinked polymer is higher by 5°C or more than a melting point of the temperature-sensitive crosslinked fine particles.

4. The window material according to any one of claim 1 to claim 3, wherein the temperature-sensitive non-crosslinked polymer comprises a side chain crystalline polymer A,
the side chain crystalline polymer A comprises 70 to 100% by mass of a constituent unit derived from a (meth)acrylic monomer comprising a linear alkyl group having 14 or more carbon atoms,
the temperature-sensitive crosslinked fine particles comprise a side chain crystalline polymer B, and
the side chain crystalline polymer B comprises 70 to 100% by mass of the constituent unit derived from a (meth)acrylic monomer comprising a linear alkyl group having 14 or more carbon atoms.

5. A light-transparent roof material comprising:
at least one layer of a light-transparent base material layer and at least one layer of an adhesive layer,
the adhesive layer comprising an adhesive composition comprising 1 to 20 parts by mass of a temperature-sensitive non-crosslinked polymer, and 1 to 100 parts by mass of temperature-sensitive crosslinked fine particles with respect to 100 parts by mass of an adhesive agent,
a refractive index of the temperature-sensitive crosslinked fine particles reducing with an increase in temperature,
a refractive index decreasing proportion, as an amount of decrease in the refractive index per 1°C, of the temperature-sensitive crosslinked fine particles being larger near a melting point of the temperature-sensitive crosslinked fine particles than in a temperature range not near the melting point of the temperature-sensitive crosslinked fine particles,
an adhesive force of the adhesive composition reducing with an increase in temperature, and
an adhesive force reduction proportion, as an amount of decrease in adhesive force per 1°C, of the adhesive composition being larger near a melting point of the temperature-sensitive non-crosslinked polymer than in a temperature range not near the melting point of the temperature-sensitive non-crosslinked polymer.

6. The light-transparent roof material according to claim 5, wherein the difference between a haze value at 23°C and a haze value at 60°C is 10% or more, and
an adhesive force of the adhesive composition is 1 N/25 mm or more at 23°C and 0.1 N/25 mm or less at 60°C.

7. The light-transparent roof material according claim 5 or claim 6, wherein a melting point of the temperature-sensitive non-crosslinked polymer is higher by 5°C or more than a melting point of the temperature-sensitive crosslinked fine particles.

8. The light-transparent roof material according to any one of claim 5 to claim 7, wherein the temperature-sensitive non-crosslinked polymer comprises a side chain crystalline polymer A,
the side chain crystalline polymer A comprises 70 to 100% by mass of a constituent unit derived from a (meth)acrylic monomer comprising a linear alkyl group having 14 or more carbon atoms,
the temperature-sensitive crosslinked fine particles comprise a side chain crystalline polymer B, and
the side chain crystalline polymer B comprises 70 to 100% by mass of the constituent unit derived from a (meth)acrylic monomer comprising a linear alkyl group having 14 or more carbon atoms.

9. An architecture comprising the window material according to any one of claim 1 to claim 4, and/or the light-transparent roof material according to any one of claim 5 to claim 8.

10. A vehicle, a ship, or an aircraft comprising:
the window material according to any one of claim 1 to claim 4, and/or the light-transparent roof material according to any one of claim 5 to claim 8.

11. An adhesive composition comprising 1 to 20 parts by mass of a temperature-sensitive non-crosslinked polymer, and 1 to 100 parts by mass of temperature-sensitive crosslinked fine particles with respect to 100 parts by mass of an adhesive agent,
a refractive index of the temperature-sensitive crosslinked fine particles reducing with an increase in temperature,
a refractive index reduction proportion, as an amount of decrease in the refractive index per 1°C, of the temperature-sensitive crosslinked fine particles being larger near a melting point of the temperature-sensitive crosslinked fine particles than in a temperature range not near the melting point of the temperature-sensitive crosslinked fine particles,
an adhesive force of the adhesive composition reducing with an increase in temperature, and
the adhesive force reduction proportion, as an amount of decrease in adhesive force per 1°C, of the adhesive composition being larger near a melting point of the temperature-sensitive non-crosslinked polymer than in a temperature range not near the melting point of the temperature-sensitive non-crosslinked polymer.

12. The adhesive composition according to claim 11, wherein an adhesive force is 1 N/25 mm or more at 23°C and 0.1 N/25 mm or less at 60°C.

13. The adhesive composition according to claim 11 or claim 12, wherein the melting point of the temperature-sensitive non-crosslinked polymer is higher by 5°C or more than the melting point of the temperature-sensitive cross-linked fine particles.

14. The adhesive composition according to claim 11 or claim 12, wherein a difference between the melting point of the temperature-sensitive non-crosslinked polymer and the melting point of the temperature-sensitive cross-linked fine particles is less than 5°C.

15. The adhesive composition according to any one of claim 11 to claim 14, wherein the temperature-sensitive non-crosslinked polymer comprises a side chain crystalline polymer A,
the side chain crystalline polymer A comprises 70 to 100% by mass of a constituent unit derived from a (meth)acrylic monomer comprising a linear alkyl group having 14 or more carbon atoms,
the temperature-sensitive cross-linked fine particles comprise a side chain crystalline polymer B, and
the side chain crystalline polymer B comprises 70 to 100% by mass of the constituent unit derived from a (meth)acrylic monomer comprising a linear alkyl group having 14 or more carbon atoms.

16. An adhesive sheet comprising an adhesive layer comprising the adhesive composition according to any one of claim 11 to claim 15.

17. The adhesive sheet according to claim 16, wherein a difference between a haze value at 23°C and a haze value at 60°C is 10% or more.
